(19) Europäisches Patentamt
European Patent Office
Office européen des brevets

(11) **EP 3 659 802 B1**

(12) **EUROPEAN PATENT SPECIFICATION**

(45) Date of publication and mention
of the grant of the patent:
**12.07.2023 Bulletin 2023/28**

(21) Application number: **18838517.3**

(22) Date of filing: **27.07.2018**

(51) International Patent Classification (IPC):
**B29D 7/01** (2006.01)   **G02B 1/14** (2015.01)
**B29C 48/00** (2019.01)   **B29C 48/07** (2019.01)
**B29C 48/21** (2019.01)   **B29C 48/88** (2019.01)
**B29C 48/885** (2019.01)  **B29C 48/92** (2019.01)
**B32B 27/08** (2006.01)   **B32B 27/20** (2006.01)
**B32B 27/28** (2006.01)   **B32B 27/30** (2006.01)
**B32B 27/32** (2006.01)   **B32B 27/34** (2006.01)
**B32B 27/36** (2006.01)   **B32B 27/38** (2006.01)
**B32B 27/42** (2006.01)   **B29K 33/00** (2006.01)
**B29K 69/00** (2006.01)

(52) Cooperative Patent Classification (CPC):
**B29D 7/01; B29C 48/022; B29C 48/07;
B29C 48/21; B29C 48/885; B29C 48/914;
B29C 48/92; B32B 27/08; B32B 27/20;
B32B 27/28; B32B 27/281; B32B 27/283;
B32B 27/285; B32B 27/286; B32B 27/288;** (Cont.)

(86) International application number:
**PCT/JP2018/028168**

(87) International publication number:
**WO 2019/022213 (31.01.2019 Gazette 2019/05)**

(54) **LAYERED/EXTRUDED RESIN SHEET, AND PROTECTIVE SHEET FOR LIQUID CRYSTAL DISPLAY WITH INFRARED SENSOR**

MEHRSCHICHTIGE/EXTRUDIERTE HARZFOLIE UND SCHUTZFOLIE FÜR FLÜSSIGKRISTALLANZEIGE MIT INFRAROTSENSOR

FEUILLE DE RÉSINE STRATIFIÉE/EXTRUDÉE, ET FEUILLE PROTECTRICE POUR AFFICHAGE À CRISTAUX LIQUIDES AVEC CAPTEUR INFRAROUGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.07.2017 JP 2017146447**

(43) Date of publication of application:
**03.06.2020 Bulletin 2020/23**

(73) Proprietor: **Kuraray Co., Ltd.
Okayama 710-0801 (JP)**

(72) Inventor: **FUNAZAKI, Kazuo
Tainai-shi
Niigata 959-2691 (JP)**

(74) Representative: **Müller-Boré & Partner
Patentanwälte PartG mbB
Friedenheimer Brücke 21
80639 München (DE)**

(56) References cited:
**WO-A1-2015/093037   WO-A1-2016/042727
WO-A1-2016/042727   WO-A1-2017/164276
WO-A1-2018/030504   JP-A- 2007 185 956
JP-A- 2010 085 978   US-A1- 2017 210 104**

**(Cont. next page)**

(52) Cooperative Patent Classification (CPC): (Cont.)
    **B32B 27/302; B32B 27/32; B32B 27/34;**
    **B32B 27/36; B32B 27/365; B32B 27/38;**
    **B32B 27/42; G02B 1/14;** B29C 2948/9258;
    B29C 2948/92666; B29C 2948/92704;
    B29C 2948/92923; B29C 2948/92942;
    B29K 2033/12; B29K 2069/00; B32B 2250/02;
    B32B 2250/03; B32B 2250/244; B32B 2255/10;
    B32B 2270/00; B32B 2307/30; B32B 2307/306;
    B32B 2307/4026; B32B 2307/412; B32B 2307/42;
    B32B 2307/536; B32B 2307/554; B32B 2307/558;
    B32B 2307/71; B32B 2307/7265; B32B 2307/732;

B32B 2457/202; B32B 2571/00

## Description

### Technical Field

The present invention relates to an extruded laminated resin plate and a protective plate for a liquid crystal display equipped with an infrared sensor.

### Background Art

Flat-panel displays such as liquid crystal displays, and touch panel displays in which such flat-panel displays are combined with touch panels (also called touch screens) are used in ATMs of financial institutions such as banks; vending machines; and digital information devices such as mobile phones (including smart phones), portable information terminals (PDAs) such as tablet-type personal computers, digital audio players, portable game machines, copying machines, facsimile machines, and car navigation systems. A transparent protective plate is provided on a surface of, for example, a flat-panel display such as a liquid crystal display or a touch panel in order to prevent scratches and the like from being formed on the surface. Conventionally, tempered glass has been mainly used as such protective plates. However, the development of transparent resin plates has been in progress in view of their workability and lightweight. The protective plate is required to have features such as luster, abrasion resistance, and impact resistance.

As a protective plate made of a transparent resin, a resin plate including a polycarbonate layer, which is excellent in impact resistance, and a methacrylic resin layer, which is excellent in luster and abrasion resistance, has been studied. Such a resin plate is preferably manufactured by coextrusion molding. In this case, a strain stress may remain in the obtained resin plate due to a difference between characteristics of these two types of resins. The strain stress remaining on the resin plate is called a "residual stress". In a resin plate having this residual stress, there is a possibility that warping or the like may occur due to a thermal change.

As a method for reducing a residual stress in a resin plate and thereby preventing warping from occurring, Patent Literature 1 discloses a method for adjusting a rotating speed of a cooling roll used for extrusion molding (Claim 1). Patent Literature 2 discloses a method using a resin which is obtained by copolymerizing, as a methacrylic resin to be laminated on polycarbonate, a methacrylic acid ester such as methyl methacrylate (MMA) and an aromatic vinyl monomer such as styrene, and then hydrogenating an aromatic double bond (Claim 2).

Further, in order to solve the above-described problem, improvements in heat resistance and moisture resistance of methacrylic resins have been studied. For example, Patent Literature 3 discloses a method using, as a methacrylic resin to be laminated on polycarbonate, a resin having an MMA unit, and a unit selected from a methacrylic acid (MA) unit, an acrylic acid (AA) unit, a maleic anhydride unit, an N-substituted or unsubstituted maleimide unit, a glutaric anhydride structural unit, and a glutarimide structural unit, and having a glass transition temperature (Tg) of 110°C or higher (Claim 1).

Further, Patent Literature 4 discloses a method for reducing a difference between linear expansion rates (also referred to as linear expansion coefficients) of two resin sheets in a decorative sheet in which the two resin sheets are laminated with at least one design layer interposed therebetween (Claim 1).

A cured film having a low reflectivity for providing abrasion resistance (a hard coat property) and/or improving visibility can be formed on at least one of the surfaces of a protective plate (Claims 1 and 2 of Patent Literature 5, Claim 1 of Patent Literature 6, etc.).

A protective plate for a liquid crystal display is disposed on the front side (the viewer side) of the liquid crystal display, and a viewer views the screen of the liquid crystal display through this protective plate. Note that the protective plate hardly changes a polarization property of light emitted from the liquid crystal display. Therefore, when the screen is viewed through a polarizing filter such as polarized sunglasses, the screen may become darker depending on the angle between the polarization axis of the emitted light and the transmission axis of the polarizing filter, and hence the visibility of images may deteriorate. Therefore, a protective plate for a liquid crystal display, capable of preventing the deterioration of the visibility of images, which may occur when the screen of the liquid crystal display is viewed through the polarizing filter, has been studied. For example, Patent Literature 7 discloses a liquid crystal display protective plate formed of an abrasion resistant resin plate including a cured film formed on at least one of the surfaces of a resin substrate and having an in-plane retardation (Re) value of 85 to 300 nm (Claim 1).

In general, a stress occurs in an extruded resin plate when it is molded. As a result, molecules may be oriented and hence retardation may occur (see paragraph [0034] of Patent Literature 8). Further, in an extruded resin plate including a plurality of resin layers, each of the resin layers may have a different degree of a residual stress. Further, in the molding of an extruded resin plate, when the extruded resin plate is separated from the last cooling roll, streaky defects (so-called chatter marks) may occur on the surface of the extruded resin plate and hence its surface quality may deteriorate. It is possible to reduce the stress and the chatter marks that may occur during the molding by adjusting manufacturing conditions such as rotating speeds of cooling rolls and take-off rolls used in the extrusion molding.

For example, in order to reduce the stress that occurs during the molding of an extruded resin plate and to prevent an Re value from decreasing, each of Patent Literatures 8 and 9 discloses a method for manufacturing an extruded resin plate, in which when the extruded resin plate including a methacrylic resin layer laminated on at least one surface of a polycarbonate layer is coextruded, manufacturing conditions such as a relation between circumferential speeds of a plurality of cooling rolls and take-off rolls and an overall temperature of the resin at the time when the extruded resin plate is separated from the last cooling roll are optimized (Claim 1 of Patent Literature 8, Claims 3 and 4 of Patent Literature 9, etc.).

**Citation List**

**Patent Literature**

Patent Literature 1: Japanese Unexamined Patent Application Publication No. 2007-185956
Patent Literature 2: International Patent Publication No. WO2011/145630
Patent Literature 3: Japanese Unexamined Patent Application Publication No. 2009-248416
Patent Literature 4: Japanese Unexamined Patent Application Publication No. 2007-118597
Patent Literature 5: Japanese Unexamined Patent Application Publication No. 2004-299199
Patent Literature 6: Japanese Unexamined Patent Application Publication No. 2006-103169
Patent Literature 7: Japanese Unexamined Patent Application Publication No. 2010-085978
Patent Literature 8: International Patent Publication No. WO2015/093037
Patent Literature 9: International Patent Publication No. WO2016/038868
Patent Literature 10: Japanese Unexamined Patent Application Publication No. 2000-105541

**Summary of Invention**

**Technical Problem**

In recent years, as a protective plate for a flat panel display such as a liquid crystal display and a touch panel, a semitransparent black protective plate has been studied in order to improve visibility of a black color. However, in the case of the semitransparent black protective plate, although the visibility of a black color is improved, transparency to light is lowered and hence images tend to become darker. In particular, the visibility tends to deteriorate when images are viewed through a polarizing filter such as polarized sunglasses.

As a method for improving the visibility of a black color, it is conceivable to optimize a light transmittance. For example, Patent Literature 10 discloses a front plate for a display in which a light transmittance at a wavelength of 450 nm is higher than that at a wavelength of 525 nm, and the light transmittance at the wavelength of 525 nm is higher than that at a wavelength of 630 nm (Claim 1). However, in Patent Literature 10, no study has been made for an improvement in visibility in a situation where a screen of a liquid crystal display or the like is viewed through a polarizing filter such as polarized sunglasses.

Further, in recent years, a car navigation system equipped with an infrared sensor that detects a dozing state of a driver by monitoring movements of his/her pupil(s) and eyelid(s) has been developed. For a protective plate used in such a use, it is necessary to ensure a sufficient light transmittance even in an infrared-light range so that the infrared sensor can operate satisfactorily.

The present invention has been made in view of the above-described circumstances and an object thereof is to provide an extruded resin plate which can be suitably used as a protective plate for a flat panel display such as a liquid crystal display equipped with an infrared sensor or a touch panel or the like attached to such a flat panel display, in which an occurrence of warping caused by a thermal change is suppressed, and visibility of a black color and visibility under an environment in which a polarizing filter is used are satisfactory, and whose light transmittance is excellent in both a visible-light range and an infrared-light range so that the infrared sensor can operate satisfactorily.

Note that although the present invention is suitably used as a protective plate for a flat panel display such as a liquid crystal display, a touch panel, or the like, the present invention can also be used in other arbitrary uses.

**Solution to Problem**

The present invention provides an extruded resin plate according to claim 1. Preferred embodiments are claimed in dependent claims 2 to 11.

**Advantageous Effects of Invention**

According to the present invention, it is possible to provide an extruded resin plate which can be suitably used as a protective plate for a flat panel display such as a liquid crystal display equipped with an infrared sensor or a touch panel attached to such a flat panel display, in which an occurrence of warping caused by a thermal change is suppressed, and visibility of a black color and visibility under an environment in which a polarizing filter is used are satisfactory, and whose light transmittance is excellent in both a visible-light range and an infrared-light range so that the infrared sensor can operate satisfactorily.

**Brief Description of Drawings**

Fig. 1 is a schematic cross section of an extruded resin plate according to a first embodiment of the present invention;
Fig. 2 is a schematic cross section of an extruded resin plate according to a second embodiment of the present invention; and
Fig. 3 is a schematic diagram of a manufacturing apparatus for an extruded resin plate according to an embodiment of the present invention.

**Description of Embodiments**

[Extruded Resin Plate]

The present invention relates to an extruded resin plate suitable as a protective plate or the like for a flat panel display such as a liquid crystal display, a touch panel, or the like. An extruded resin plate according to the present invention is a resin plate in which a layer containing a methacrylic resin (PM) (hereinafter, also simply referred to as a methacrylic-resin containing layer) is laminated on at least one surface of a layer containing polycarbonate (PC) (hereinafter, also simply referred to as a polycarbonate containing layer).

The polycarbonate (PC) is excellent in impact resistance. Meanwhile, the methacrylic resin (PM) is excellent in luster, transparency, and abrasion resistance. Therefore, the extruded resin plate in which these resins are laminated according to the present invention is excellent in luster, transparency, impact resistance, and abrasion resistance. Further, since the extruded resin plate according to the present invention is manufactured by an extrusion molding method, its productivity is excellent.

(Methacrylic-resin Containing Layer)

The methacrylic-resin containing layer contains at least one type of a methacrylic resin (PM). The methacrylic resin (PM) is preferably a homopolymer or a copolymer containing a structural unit derived from at least one type of a methacrylic acid hydrocarbon ester (hereinafter, also simply referred to as a methacrylic acid ester) including methyl methacrylate (MMA).

A hydrocarbon group in the methacrylic acid ester may be an acyclic aliphatic hydrocarbon group such as a methyl group, an ethyl group, and a propyl group, an alicyclic hydrocarbon group, or an aromatic hydrocarbon group such as a phenyl group.

In view of transparency, the amount of a methacrylic acid ester monomer unit contained in the methacrylic resin (PM) is preferably 50 mass% or larger, more preferably 80 mass% or larger, and particularly preferably 90 mass% or larger, or may be 100 mass%.

The methacrylic resin (PM) may contain a structural unit derived from at least one type of a monomer other than the methacrylic acid ester. Examples of the other monomer(s) include acrylic acid esters such as methyl acrylate (MA), ethyl acrylate, n-propyl acrylate, isopropyl acrylate, n-butyl acrylate, isobutyl acrylate, tert-butyl acrylate, hexyl acrylate, 2-ethylhexyl acrylate, nonyl acrylate, decyl acrylate, dodecyl acrylate, stearyl acrylate, 2-hydroxyethyl acrylate, 2-hydroxypropyl acrylate, 4-hydroxybutyl acrylate, cyclohexyl acrylate, 2-methoxyethyl acrylate, 3-methoxybutyl acrylate, trifluoromethyl acrylate, trifluoroethyl acrylate, pentafluoroethyl acrylate, glycidyl acrylate, allyl acrylate, phenyl acrylate, toluyl acrylate, benzyl acrylate, isobornyl acrylate, and 3-dimethylaminoethyl acrylate. Among them, in view of availability, MA, ethyl acrylate, n-propyl acrylate, isopropyl acrylate, n-butyl acrylate, isobutyl acrylate, and tert-butyl acrylate are preferred. MA and ethyl acrylate are more preferred. Further, MA is particularly preferred. The amount of the structural unit derived from the other monomer(s) contained in the methacrylic resin (PM) is preferably 10 mass% or smaller, more preferably 5 mass% or smaller, and particularly preferably 2 mass% or smaller.

The methacrylic resin (PM) is preferably obtained by polymerizing at least one type of a methacrylic acid ester including MMA and, optionally, other monomers. When a plurality of types of monomers are used, the polymerization is usually performed after preparing a monomer mixture by mixing the plurality of types of monomers. The polymerization method is not limited to any particular methods. In view of productivity, a radical polymerization method such as a bulk polymerization method, a suspension polymerization method, a solution polymerization method, and an emulsion polymerization method is preferred.

The weight average molecular weight (Mw) of the methacrylic resin (PM) is preferably 40,000 to 500,000. When the molecular weight Mw is 40,000 or higher, the methacrylic-resin containing layer has excellent abrasion resistance and excellent heat resistance. Further, when the molecular weight Mw is 500,000 or lower, the methacrylic-resin containing layer has excellent moldability.

In this specification, "Mw" is a standard polystyrene equivalent molecular weight measured by using gel permeation chromatography (GPC) unless otherwise specified.

In this specification, the glass transition temperature of the methacrylic-resin containing layer is represented by Tg(M). In order to facilitate the manufacturing of extruded resin plates having excellent surface quality and being less prone to warping caused by a residual stress, the lower limit of Tg(M) is 110°C, preferably 115°C, more preferably 120°C, and particularly preferably 125°C. Further, the upper limit of Tg(M) is preferably 160°C, more preferably 155°C, and particularly preferably 150°C.

<Methacrylic Resin (A)>

The methacrylic resin (PM) is preferably a methacrylic resin (A) containing at least one type of a methacrylic acid ester monomer unit containing an MMA monomer unit. The amount of the MMA monomer unit contained in the methacrylic resin (A) is preferably 90 mass% or larger, more preferably 95 mass% or larger, particularly preferably 98 mass% or larger, and most preferably 100 mass%.

The methacrylate resin (A) may contain a structural unit derived from at least one type of a monomer other than the methacrylic acid ester. As the other monomer(s), those described above in the description of the methacrylic resin (PM) may be used. The amount of the other monomer unit(s) contained in the methacrylic resin (A) is preferably 10 mass% or smaller, more preferably 5 mass% or smaller, and particularly preferably 2 mass% or smaller.

<Methacrylic Resin (B)>

In an embodiment according to the present invention, the methacrylic-resin containing layer may contain a methacrylic resin (B) containing a structural unit derived from MMA and an alicyclic hydrocarbon ester.

In the following description, the alicyclic hydrocarbon ester is referred to as a "methacrylic acid ester (I)". Examples of the methacrylic acid ester (I) include methacrylic acid monocyclic aliphatic hydrocarbon esters such as cyclohexyl methacrylate, cyclopentyl methacrylate, and cycloheptyl methacrylate; and methacrylic acid polycyclic aliphatic hydrocarbon esters such as 2-norbornyl methacrylate, 2-methyl-2-norbornyl methacrylate, 2-ethyl-2-norbornyl methacrylate, 2-isobornyl methacrylate, 2-methyl-2-isobornyl methacrylate, 2-ethyl-2-isobornyl methacrylate, 8-tricyclo [5. 2. 1. $0^{2, 6}$] decanyl methacrylate (TCDMA), 8-methyl -8-tricyclo [5. 2. 1. $0^{2, 6}$] decanyl methacrylate, 8-ethyl-8-tricyclo [5. 2. 1. $0^{2, 6}$] decanyl methacrylate, 2-adamantyl methacrylate, 2-methyl-2-adamantyl methacrylate, 2-ethyl-2-adamantyl methacrylate, 1-adamantyl methacrylate, 2-fenchyl methacrylate, 2-methyl-2-fenchyl methacrylate, and 2-ethyl-2-fenchyl methacrylate. Among them, a methacrylic acid polycyclic aliphatic hydrocarbon ester is preferred, and 8-tricyclo [5. 2. 1. $0^{2, 6}$] decanyl methacrylate (TCDMA) is more preferred.

As the methacrylic resin (B), a methacrylic resin containing a structural unit derived from MMA and a methacrylic acid polycyclic aliphatic hydrocarbon ester is more preferred. Further a methacrylic resin containing a structural unit derived from MMA and 8-tricyclo [5. 2. 1. $0^{2, 6}$] decanyl methacrylate (TCDMA) is particularly preferred.

In view of hardness, the amount of an MMA monomer unit contained in the methacrylic resin (B) is preferably 40 to 80 mass%, more preferably 50 to 80 mass%, and particularly preferably 50 to 60 mass%.

In order to reduce a linear expansion rate ratio (SR) (which will be described later) and to increase a glass transition temperature (Tg(M)) to 110°C or higher, the amount of the methacrylic acid ester (I) monomer unit contained in the methacrylate resin (B) is preferably 20 to 60 mass%, more preferably 20 to 50 mass%, and particularly preferably 40 to 50 mass%. When the amount of the methacrylic acid ester (I) monomer unit is larger than 60 mass%, impact resistance of the methacrylic-resin containing layer may deteriorate.

<Methacrylic Resin Composition (MR)>

In another embodiment according to the present invention, the methacrylic-resin containing layer may include a methacrylic resin composition (MR) (hereinafter, also simply referred to as a resin composition (MR)) containing a methacrylic resin (A) and an SMA resin.

In this specification, the "SMA resin" is a copolymer containing a structural unit derived from at least one type of an aromatic vinyl compound (II), a structural unit derived from at least one type of an acid anhydride (III) including maleic anhydride (MAH), and more preferably a structural unit derived from MMA.

The methacrylic resin composition (MR) may preferably contain 5 to 80 mass% of a methacrylic resin (A) and 95 to 20 mass% of an SMA resin.

In order to increase the glass transition temperature (Tg(M)) to 110°C or higher, the amount of the methacrylic resin (A) contained in the resin composition (MR) is preferably 80 mass% or smaller, more preferably 5 to 55 mass%, and particularly preferably 10 to 50 mass%

The SMA resin is a copolymer containing a structural unit derived from at least one type of an aromatic vinyl compound (II) and at least one type of an acid anhydride (III) including MAH.

Examples of the aromatic vinyl compound (II) include styrene (St); nucleus alkyl-substituted styrene such as 2-methylstyrene, 3-methylstyrene, 4-methylstyrene, 4-ethylstyrene, and 4-tert-butylstyrene; and $\alpha$-alkyl-substituted styrene such as $\alpha$-methylstyrene and 4-methyl-$\alpha$-methylstyrene. Among them, styrene (St) is preferred in view of availability. In view of transparency and moisture resistance of the resin composition (MR), the amount of the aromatic vinyl compound (II) monomer unit contained in the SMA resin is preferably 50 to 85 mass%, more preferably 55 to 82 mass%, and particularly preferably 60 to 80 mass%.

As the acid anhydride (III), at least maleic anhydride (MAH) may be used in view of availability. Further, other acid anhydrides such as citraconic anhydride and dimethyl maleic anhydride may be used as required. In view of transparency and heat resistance of the resin composition (MR), the amount of the acid anhydride (III) monomer unit contained in the SMA resin is preferably 15 to 50 mass%, more preferably 18 to 45 mass%, and particularly preferably 20 to 40 mass%.

The SMA resin may contain a structural unit derived from at least one type of a methacrylic acid ester monomer in addition to the aromatic vinyl compounds (II) and the acid anhydride (III). Examples of the methacrylic acid ester include MMA, ethyl methacrylate, propyl methacrylate, isopropyl methacrylate, n-butyl methacrylate, isobutyl methacrylate, t-butyl methacrylate, 2-ethylhexyl methacrylate, cyclohexyl methacrylate, phenyl methacrylate, benzyl methacrylate, and 1-phenylethyl methacrylate. Among them, a methacrylic acid alkyl ester of which the carbon number of an alkyl group is 1 to 7 is preferred. In view of heat resistance and transparency of the SMA resin, MMA is particularly preferred. In view of bending workability and transparency of the extruded resin plate, the amount of the methacrylic acid ester monomer unit contained in the SMA resin is preferably 1 to 35 mass%, more preferably 3 to 30 mass%, and particularly preferably 5 to 26 mass%. In such cases, the amount of the contained aromatic vinyl compound (II) monomer unit is preferably 50 to 84 mass%, and the amount of the contained acid anhydride (III) monomer unit is preferably 15 to 49 mass%.

The SMA resin may have a structural unit derived from a monomer(s) other than the aromatic vinyl compounds (II), the acid anhydrides (III), and the methacrylic acid ester. As the other monomer(s), those described above in the description of the methacrylic resin (PM) may be used. The amount of the other monomer unit(s) contained in the SMA resin is preferably 10 mass% or smaller, more preferably 5 mass% or smaller, and particularly preferably 2 mass% or smaller.

The SMA resin is obtained by polymerizing the aromatic vinyl compound (II), the acid anhydride (III), optionally the methacrylic acid ester, and optionally other monomers. In this polymerization, the polymerization itself is usually performed after preparing a monomer mixture by mixing a plurality of types of monomers. The polymerization method is not limited to any particular methods. In view of productivity, a radical polymerization method such as a bulk polymerization method and a solution polymerization method is preferred.

The molecular weight Mw of the SMA resin is preferably 40,000 to 300,000. When the molecular weight Mw is 40,000 or higher, the methacrylic-resin containing layer has excellent abrasion resistance and excellent impact resistance. Further, when the molecular weight Mw is 300,000 or lower, the methacrylic-resin containing layer has excellent moldability.

In order to reduce the linear expansion rate ratio (SR) (which will be described later) and to increase the glass transition temperature (Tg(M)) to 110°C or higher, the amount of the SMA resin contained in the resin composition (MR) is preferably 20 mass% or larger, more preferably 45 to 95 mass%, and particularly preferably 50 to 90 mass%.

The resin composition (MR) is obtained, for example, by mixing the methacrylic resin (A) and the SMA resin. Examples of the mixing method include a melt mixing method and a solution mixing method. In the melt mixing method, melt-kneading may be performed under an atmosphere of an inert gas such as a nitrogen gas, an argon gas, and a helium gas as required by using a melt-kneader such as a single-screw or multi-screw kneader, an open roll, a Banbury mixer, and a kneader. In the solution mixing method, the methacrylic resin (A) and the SMA resin may be mixed by dissolving them in an organic solvent such as toluene, tetrahydrofuran, and methyl ethyl ketone.

The methacrylic-resin containing layer may contain the methacrylic resin (PM) and optionally at least one type of other polymers.

In one embodiment, the methacrylic-resin containing layer may contain the methacrylic resin (B) and optionally at least one type of other polymers.

In another embodiment, the methacrylic-resin containing layer may be composed of the methacrylic resin composition (MR). Further, the methacrylic resin composition (MR) may contain the methacrylic resin (A), the SMA resin, and optionally at least one type of other polymers.

There is no particular limitation on the other polymer(s). Examples of the other polymer(s) include other thermoplastic resins such as polyolefin such as polyethylene and polypropylene, polyamide, polyphenylene sulfide, polyether ether ketone, polyester, polysulfone, polyphenylene oxides, polyimide, polyetherimide, and polyacetal; and thermosetting resins such as phenolic resins, melamine resins, silicone resins, and epoxy resins. The amount of the other polymer(s) contained in the methacrylic-resin containing layer is preferably 10 mass% or smaller, more preferably 5 mass% or smaller, and particularly preferably 2 mass% or smaller.

The methacrylic-resin containing layer may contain various additives as required. Examples of the additives include antioxidants, thermal degradation preventing agents, ultraviolet absorbers, light stabilizers, lubricants, mold release agents, polymer processing aids, antistatic agents, flame retardants, dyes/pigments, light diffusing agents, matting agents, impact modifiers such as core-shell particles and block copolymers, and phosphors. The amount of the additive(s) may be determined as appropriate as long as the effect of the present invention is not impaired. For example, based on 100 pts.mass of the resin constituting the methacrylic-resin containing layer, the amount of an antioxidant is preferably 0.01 to 1 pts.mass; the amount of an ultraviolet absorber is preferably 0.01 to 3 pts.mass; the amount of a light stabilizer is preferably 0.01 to 3 pts.mass; the amount of a lubricant is preferably 0.01 to 3 pts.mass; and the amount of a dye/pigment is preferably 0.01 to 3 pts.mass.

When other polymers and/or additives are contained in the methacrylic resin (PM) or the methacrylic resin (B), they may be added during or after the polymerization of the methacrylic resin (PM) or the methacrylic resin (B). When other polymers and/or additives are contained in the methacrylic resin composition (MR), they may be added during the polymerization of the methacrylic resin (A) and/or the SMA resin, or during or after the mixing of these resins.

In view of stability of heat-melt molding, the melt flow rate (MFR) of the resin constituting the methacrylic-resin containing layer is preferably 1 to 10 g/10 minutes, more preferably 1.5 to 7 g/10 minutes, and particularly preferably 2 to 4 g/10 minutes. In this specification, the MFR of the resin constituting the methacrylic-resin containing layer is a value that is measured at a temperature of 230°C under a load of 3.8 kg by using a melt indexer unless otherwise specified.

(Polycarbonate Containing Layer)

The polycarbonate containing layer contains at least one type of polycarbonates (PC). The polycarbonate (PC) is preferably obtained by copolymerizing at least one type of divalent phenol and at least one type of a carbonate precursor. Examples of the manufacturing method include an interfacial polymerization method in which an aqueous solution of divalent phenol and an organic solvent solution of a carbonate precursor are reacted at the interface, and a transesterification method in which divalent phenol and a carbonate precursor are reacted at a high temperature under a reduced pressure under a solvent-free condition.

Examples of the divalent phenol include 2,2-bis (4-hydroxyphenyl) propane (commonly known as bisphenol A), 1,1-bis (4-hydroxyphenyl) ethane, 1,1-bis (4-hydroxyphenyl) cyclohexane, 2,2-bis (3-methyl-4-hydroxyphenyl) propane, 2,2-bis (3,5-dimethyl-4-hydroxyphenyl) propane, bis (4-hydroxyphenyl) sulfide, and bis (4-hydroxyphenyl) sulfone. Among them, bisphenol A is preferred. Examples of the carbonate precursor include carbonyl halide such as phosgene; carbonate esters such as diphenyl carbonate; and haloformate such as dihaloformate of divalent phenol.

The molecular weight Mw of the polycarbonate (PC) is preferably 10,000 to 100,000, and more preferably 20,000 to 70,000. When the molecular weight Mw is 10,000 or higher, the polycarbonate containing layer has excellent impact resistance and excellent heat resistance. Further, when the molecular weight Mw is 100,000 or lower, the polycarbonate containing layer has excellent moldability.

Commercially available polycarbonate products may be used as the polycarbonate (PC). Examples include "Caliber (Registered Trademark)" and "SD Polyca (Registered Trademark)" manufactured by Sumika Styron Polycarbonate Limited, "Eupilon/Novarex (Registered Trademark)" manufactured by Mitsubishi Engineering Plastics Corporation "Taflon (Registered Trademark)" manufactured by Idemitsu Kosan Co., Ltd., and "Panlite (Registered Trademark)" manufactured by Teijin Chemicals Ltd.

The polycarbonate containing layer may include at least one type of other polymers and/or various additives as required. As the other polymers and various additives, polymers and various additives similar to those described above in the description of the methacrylic-resin containing layer may be used. The amount of the other polymer(s) contained in the polycarbonate containing layer is preferably 15 mass% or smaller, more preferably 10 mass% or smaller, and particularly preferably 5 mass% or smaller. The amount of the additive(s) may be determined as appropriate as long as the effect of the present invention is not impaired. Based on 100 pts.mass of the polycarbonate (PC), the amount of an antioxidant is preferably 0.01 to 1 pts.mass; the amount of an ultraviolet absorber is preferably 0.01 to 3 pts.mass; the amount of a light stabilizer is preferably 0.01 to 3 pts.mass; the amount of a lubricant is preferably 0.01 to 3 pts.mass;

and the amount of a dye/pigment is preferably 0.01 to 3 pts.mass.

When other polymers and/or additives are added in the polycarbonate (PC), they may be added during or after the polymerization of the polycarbonate (PC).

In this specification, the glass transition temperature of the polycarbonate containing layer is represented by Tg(PC). The glass transition temperature Tg(PC) is preferably 120 to 160°C, more preferably 135 to 155°C, and particularly preferably 140 to 150°C.

In view of stability of heat-melt molding, the MFR of the resin constituting the polycarbonate containing layer is preferably 1 to 30 g/10 minutes, more preferably 3 to 20 g/10 minutes, and particularly preferably 5 to 10 g/10 minutes. In this specification, the MFR of the resin constituting the polycarbonate containing layer is a value that is measured at a temperature of 300°C under a load of 1.2 kg by using a melt indexer unless otherwise specified.

(Linear Expansion Rate Ratio (SR))

In the extruded resin plate according to the present invention, a ratio ((S2-S1)/S1) which is composed of a difference (S2-S1) between a linear expansion rate (S1) of the polycarbonate containing layer and a linear expansion rate (S2) of the methacrylic-resin containing layer and the linear expansion rate (S1) of the polycarbonate containing layer is defined as a linear expansion rate ratio (SR).

In order to reduce warping caused by a thermal change, the linear expansion rate ratio (SR) is from -10% to +10%, preferably from -10% to +5%, and more preferably from -5% to +2%. The linear expansion rate ratio (SR) may be from -10% to -0.1%, from -5% to - 0.1%, from +0.1% to +10%, from +0.1% to +5%, or from +0.1% to +2%. When the linear expansion rate ratio (SR) is within the above-described range, it is easy to obtain an extruded resin plate having excellent surface quality and being less prone to warping caused by a residual stress.

(Thickness of Each Layer and Extruded Resin Plate)

In order to achieve an excellent balance between abrasion resistance and impact resistance, the thickness of the methacrylic-resin containing layer is preferably 20 to 200 $\mu$m, more preferably 25 to 150 $\mu$m, and particularly preferably 30 to 100 $\mu$m. Further, the thickness of the polycarbonate containing layer is preferably 0.1 to 3.0 mm and more preferably 0.5 to 2.0 mm.

There is no particular limitation on the overall thickness (t) of the extruded resin plate according to the present invention. The overall thickness is preferably 0.1 to 3.0 mm and more preferably 0.5 to 2.0 mm when the extruded resin plate is used for a protective plate or the like for a flat panel such as a liquid crystal display, a touch panel display, or the like. If the extruded resin plate is too thin, the rigidity thereof may be insufficient. Further, if the extruded resin plate is too thick, it may hinder the reduction in weight of the flat panel such as the liquid crystal display, the touch panel display, or the like.

(Laminated Structure)

An extruded resin plate according to the present invention may include another resin layer(s) as long as the methacrylic-resin containing layer is laminated on at least one surface of the polycarbonate containing layer. Examples of the laminated structure of an extruded resin plate according to the present invention includes: a two-layer structure composed of a polycarbonate containing layer/a methacrylic-resin containing layer; a three-layer structure composed of a methacrylic-resin containing layer/a polycarbonate containing layer/a methacrylic-resin containing layer; a three-layer structure composed of a methacrylic-resin containing layer/polycarbonate containing layer/another resin layer: and a three-layer structure composed of another layer/a methacrylic-resin containing layer/a polycarbonate containing layer.

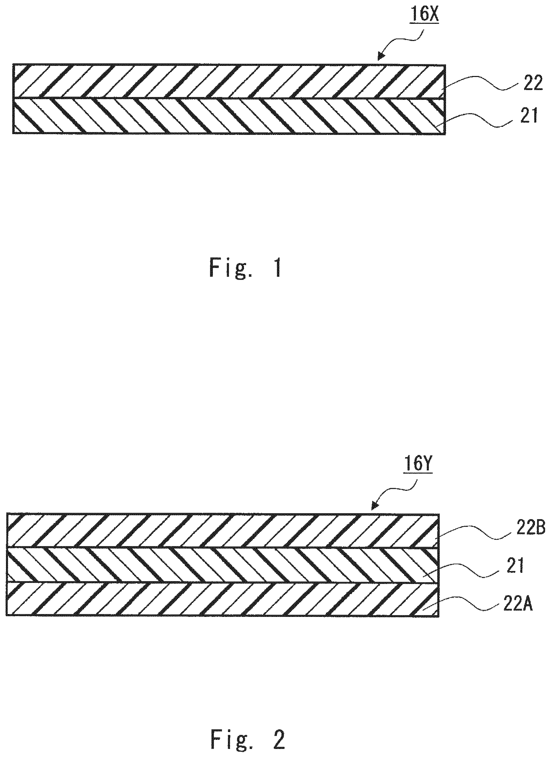

Figs. 1 and 2 are schematic cross sections of extruded resin plates according first and second embodiments of the present invention. In the figures, symbols 16X and 16Y indicate extruded resin plates; symbols 21 indicate polycarbonate containing layers; and symbols 22, 22A and 22B indicate methacrylic-resin containing layers. The extruded resin plate 16X according to the first embodiment has a two-layer structure composed of a polycarbonate containing layer 21/a methacrylic-resin containing layer 22. The extruded resin plate 16Y according to the second embodiment has a three-layer structure composed of a first methacrylic-resin containing layer 22A/a polycarbonate containing layer 21/a second methacrylic-resin containing layer 22B. Note that the structure of the extruded resin plate may be changed as desired.

(Cured Film)

An extruded resin plate according to the present invention may include a cured film on at least one outermost surface thereof as required. The cured film can function as an abrasion resistant layer or a low reflective layer for improving visibility. The cured film may be formed by a known method (see Patent Literatures 5 and 6 and the like mentioned in the "Background Art" section).

The thickness of the cured film having an abrasion resistant property (a hard coat property) (i.e., the abrasion resistant layer) is preferably 2 to 30 $\mu$m and more preferably 5 to 20 $\mu$m. If the cured film is too thin, the surface hardness is insufficient. Further, if the cured film is too thick, cracks may occur due to bending that is performed during the manufacturing process.

The thickness of the low-reflectivity cured film (the low-reflective layer) is preferably 80 to 200 nm and more preferably 100 to 150 nm. If the cured film is too thin or too thick, its low reflection performance may become unsatisfactory.

(Coloring Material that Exhibits Black)

An extruded resin plate according to the present invention contains, on a surface of and/or inside the extruded resin plate, at least one type of a coloring material that exhibits a black color, or a plurality of types of coloring materials that exhibit a black color in combination in order to optimize a light transmittance for a black color. The coloring material may be applied to the surface of the extruded resin plate manufactured by the later-described method (preferably by coextrusion molding) or may be added in at least one of the layers constituting the extruded resin plate. In view of productivity, the coloring material is preferably added in at least one of the layers constituting the extruded resin plate. Note that when the coloring material is added in at least one of the layers constituting the extruded resin plate, it is preferably added in a layer having a relatively large thickness. This is because, by doing so, even if the density of the added coloring material is relatively low, a sufficient amount of coloring material can be added and in-plane variations of the density can be reduced.

In view of visibility of a black color and visibility under an environment in which a polarizing filter is used, and in order to enable an infrared sensor to operate satisfactorily, the type and the amount of at least one type of a coloring material that exhibits a black color, or a plurality of types of coloring materials that exhibit a black color in combination contained in the extruded resin plate are selected and adjusted so that a light transmittance in a visible-light range becomes 30 to 85% and that in a infrared-light range becomes 70% or higher.

In order to prevent the light transmittance in the visible-light range from becoming excessively low, the total amount of the added coloring material based on 100 pts.mass of the total amount of the resins in the extruded resin plate is preferably 0.1 pts.mass or smaller, more preferably 0.05 pts.mass or smaller, and particularly preferably 0.03 pts.mass or smaller, though the actual preferred total amount of the added coloring material depends on the thickness of the extruded resin plate and the type of the used coloring material.

Examples of the coloring material include pigments and organic dyes. In general, although pigments are excellent in weather resistance, they are more prone to defective dispersion than organic dyes are. Conversely, although weather resistance of organic dyes is poorer than that of pigments, they are less prone to defective dispersion than pigments are and hence tend to be excellent in productivity. For uses in liquid crystal displays or the like that are mostly used indoors in which they are not exposed to direct sunlight, the weather resistance of organic dyes may be satisfactory in most cases. In such cases, an organic dye is preferred in view of dispersiveness and productivity. Further, in order to prevent a light transmittance in a range of 700 to 1,000 nm, which is the infrared-light range, from being lowered, an organic dye is preferred.

Note that for an extruded resin plate, it is preferable to refrain from using either a conductive metal oxide (e.g., lanthanum hexaboride, cesium tungsten oxide, indium tin oxide (ITO), and antimony tin oxide (ATO)), which is a near-infrared light blocking material, or a material that has a relatively large particle diameter and reflects or absorbs infrared light in order to ensure a sufficient transmittance in the infrared-light range.

The coloring material that exhibits a black color preferably absorbs light over the entire visible-light range. Therefore, it is preferable to use a plurality of types of organic dyes other than the black dye in combination as the coloring material that exhibits a black color. For example, it is possible to develop a black color by using two types of organic dyes having hue circles that are located opposite to each other.

Examples of the organic dyes include anthraquinones, azos, anthrapyridones, perylenes, anthracenes, perinones, indanthrones, quinacridones, xanthenes, thioxanthenes, oxazines, oxazolines, indigoids, thioindigoids, quinophthalones, naphthalimides, cyanines, methines, pyrazolones, lactones, coumarins, bis-benzoxazolyl thiophenes, naphthalene tetracarboxylic acids, phthalocyanines, triarylmethanes, aminoketones, bis (styryl) biphenyls, azines, rhodamines, derivatives thereof, and combinations thereof. In view of high heat resistance, property of having a broad light absorption band in a long wavelength band, and weather resistance, perinones, perylenes, azos, methines, and quinolines are preferred, and anthraquinones are more preferred.

Specific examples of preferred organic dyes are shown below. Note that they are expressed by generic names of color indexes.

Examples of anthraquinones include Solvent Red 52, Solvent Red 111, Solvent Red 149, Solvent Red 150, Solvent Red 151, Solvent Red 168, Solvent Red 191, Solvent Red 207, Disperse Red 22, Disperse Red 60, Disperse Violet 31, Solvent Blue 35, Solvent Blue 36, Solvent Blue 63, Solvent Blue 78, Solvent Blue 83, Solvent Blue 87, Solvent Blue 94, Solvent Blue 97, Solvent Green 3, Solvent Green 20, Solvent Green 28, Disperse Violet 28, Solvent Violet 13, Solvent Violet 14, and Solvent Violet 36.

Examples of perinones include Solvent Orange 60, Solvent Orange 78, Solvent Orange90, Solvent Violet 29, Solvent Red 135, Solvent Redl62, and Solvent Red 179.

Examples of perylenes include Solvent Green 3, Solvent Green 5, Solvent Orange 55, Vat Red15, Vat Orange7, F Orange240, F Red305, F Red339, and F Yellow83.

Examples of azos include Solvent Yellow 14, Solvent Yellow 16, Solvent Yellow 21, Solvent Yellow 61, Solvent Yellow 81, Solvent Red 23, Solvent Red 24, Solvent Red 27, Solvent Red 8, Solvent Red 83, Solvent Red 84, Solvent Red 121, Solvent Red 132, Solvent Violet21, Solvent Black 21, Solvent Black 23, Solvent Black 27, Solvent Black 28, Solvent Black 31, Solvent Orange 37, Solvent Orange 40, and Solvent Orange 45.

Examples of methines include Solvent Orange 80 and Solvent Yellow 93.

Examples of quinolines include Solvent Yellow 33, Solvent Yellow 98, Solvent Yellow 157, Disperse Yellow 54, and Disperse Yellow 160.

(In-Plane Retardation (Re) Value and Light Transmittance)

As described in the [Technical Problem] section, in general, in uses for protective plates in flat panel displays such as liquid crystal displays, touch panels, and the like, when a screen is viewed through a polarizing filter such as polarized sunglasses, the screen may become darker depending on the angle between the polarization axis of the emitted light and the transmission axis of the polarizing filter and hence the visibility of images may deteriorate.

In recent years, a semitransparent black resin plate has been studied in order to improve visibility of a black color. However, in general, in the case of the semitransparent black resin plate, although the visibility of a black color is improved, transparency to light is lowered. Therefore, images tend to become darker and, in particular, the visibility tends to deteriorate when images are viewed through a polarizing filter such as polarized sunglasses.

Further, in recent years, a car navigation system equipped with an infrared sensor has been developed. For a protective plate used in such a use, it is necessary to ensure a sufficient light transmittance even in an infrared-light range.

By setting the Re value and the light transmittance in suitable ranges, it is possible to provide an extruded resin plate that is excellent in visibility of a black color and visibility in an environment in which a polarizing filter is used, and enables an infrared sensor to function satisfactorily.

When the Re value is larger than 330 nm, a difference in light transmittance at each wavelength in the visible-light range becomes large when it is viewed through a polarizing filter such as polarized sunglasses. Therefore, there is a possibility that various colors are seen and the visibility deteriorates. When the Re value is smaller than 50 nm and/or the light transmittance in the visible-light range is lower than 30%, images become darker and the visibility deteriorates. In particular, when it is viewed through a polarizing filter such as polarized sunglasses, there is a possibility that images become darker and the visibility significantly deteriorates. When the light transmittance in the visible-light range of the extruded resin plate exceeds 85%, it is difficult to say that the visibility of a black color is improved as compared to that of the transparent resin plate. Further, in uses in which an infrared sensor is used, the light transmittance in the infrared-light range is preferably 70% or higher, so that the sensitivity of the infrared sensor becomes excellent and the infrared sensor functions satisfactorily.

Specifically, in view of visibility of a black color and visibility under an environment in which a polarizing filter is used, and in order to enable an infrared sensor to operate satisfactorily, the Re value of at least a part of the extruded resin plate in the width direction is 50 to 330 nm. According to the invention, the light transmittance in wavelengths of 400 to 650 nm (in the visible-light range) is 30 to 70%, and the light transmittance in wavelengths of 700 to 1,000 nm (in the infrared-light range) is 70% or higher.

In the above-described range, there is the following tendency. That is, brightness increases as the Re value increases and colors become sharper as the Re value decreases. In view of the balance between the brightness and the colors, the Re value of at least a part of the extruded resin plate in the width direction is more preferably 80 to 250 nm. In view of visibility of images, the light transmittance in the visible-light range is more preferably 50 to 70%. In order to enable the infrared sensor to operate satisfactorily, the light transmittance in the infrared-light range is more preferably 80% or higher.

It is possible to adjust the Re value by optimizing manufacturing conditions, details of which will be described later. As described above, it is possible to adjust the light transmittances in the visible-light range and in the infrared-light range by selecting and/or adjusting the type(s) and/or the amount(s) of at least one type of a coloring material that exhibits a black color or a plurality of types of coloring materials that exhibit a black color in combination. It is possible to ensure a sufficient transmittance to infrared light by using, preferably, an organic dye that does not lower the transmittance to infrared light. Further, it is preferable to refrain from using either a conductive metal oxide (e.g., lanthanum hexaboride, cesium tungsten oxide, indium tin oxide (ITO), and antimony tin oxide (ATO)), which is a near-infrared light blocking material, or a material that has a relatively large particle diameter and reflects or absorbs infrared light.

[Method for Manufacturing Extruded Resin Plate]

A preferred embodiment of the method for manufacturing an extruded resin plate having the above-described structure according to the present invention will be described hereinafter. An extruded resin plate according to the present invention can be manufactured by a publicly-known method and is preferably manufactured by a manufacturing method including coextrusion molding.

(Step (X))

Each of resins constituting a polycarbonate containing layer and a methacrylic-resin containing layer is heated and melted. Then, they are coextruded from a T-die having a wide discharge port in a molten state in a state of a thermoplastic resin laminate in which the methacrylic-resin containing layer is laminated on at least one surface of the polycarbonate containing layer.

The molten resins for the polycarbonate containing layer and the methacrylic-resin containing layer are preferably filtered in the molten state by using a filter before they are laminated. By molding these molten resins, which has been filtered in the molten state, into multiple layers, it is possible to obtain an extruded resin plate having few defects caused by foreign substances or gels. The filter material of the filter is selected as appropriate according to the use temperature, the viscosity, and the accuracy of the filtration. Examples of the filter material include a nonwoven fabric composed of polypropylene, polyester, rayon, cotton, glass fibers, or the like; a sheet-like element made of phenolic-resin impregnated cellulose; a sintered sheet-like element of a metal-fiber nonwoven fabric; a sintered sheet-like element of metal powder; wire gauze; and a combination thereof. Among them, in view of heat resistance and durability, a filter in which a plurality of sintered sheet-like elements of metal-fiber nonwoven fabric are laminated is preferred. There is no particular limitation on the filtration accuracy of the filter. The filtration accuracy is preferably 30 $\mu$m or lower, more preferably 15 $\mu$m or lower, and particularly preferably 5 $\mu$m or lower.

Examples of the lamination method include a feed block method in which resins are laminated before being fed to a T-die, and a multi-manifold method in which resins are laminated inside a T-die. In order to improve smoothness of the interface between the layers of the extruded resin plate, the multi-manifold method is preferred.

The molten thermoplastic resin laminate coextruded from the T-die is cooled by using a plurality of cooling rolls. In the present disclosure, the molten thermoplastic resin laminate is cooled by using at least three cooling rolls arranged adjacent to each other by repeating the following operation a plurality of times from n=1 (n≥1), i.e., the operation including sandwiching the thermoplastic resin laminate between an nth cooling roll and an (n+1)th cooling roll, and winding the thermoplastic resin laminate around the (n+1)th cooling roll. For example, when three cooling rolls are used, the number of repetitions is two.

Examples of the cooling rolls include a metal roll, and an elastic roll including a metal thin film on its outer periphery (hereinafter, also referred to as a metal elastic roll). Examples of the metal roll include a drilled roll and a spiral roll. The surface of the metal roll may be a mirror surface, or may have a pattern, unevenness, or the like. The metal elastic roll may include, for example, a shaft roll made of stainless steel or the like, a metal thin film made of stainless steel or the like and covering the outer peripheral surface of the shaft roll, and a fluid contained between the shaft roll and the metal thin film. Because of the presence of the fluid, the metal elastic roll can have elasticity. The thickness of the metal thin film is preferably about 2 to 5 mm. The metal thin film preferably has a bending property and flexibility, and preferably has a seamless structure with no welding joint. Such a metal elastic roll including a metal thin film has excellent durability. Further, such a metal elastic roll may be easily used because, by making its metal thin film have a mirror surface, it can be handled in the same manner as an ordinary mirror surface roll. Alternatively, by providing a pattern, unevenness, or the like on the metal thin film, it becomes a roll that can transfer the pattern, the unevenness, or the like.

The extruded resin plate obtained after the cooling is pulled out by take-off rolls. The above-described coextruding, cooling, and pulling-out steps are performed in a continuous manner. Note that in this specification, in general, a material in a heated and melted state is expressed as a "thermoplastic resin laminate" and a solidified material is expressed as an "extruded resin plate". However, there is no clear boundary between them.

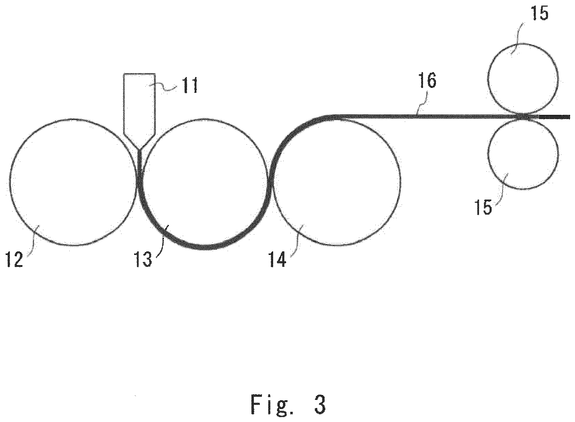

As an embodiment, Fig. 3 shows a schematic diagram of a manufacturing apparatus including a T-die 11, first to third cooling rolls 12 to 14, and a pair of take-off rolls 15. A thermoplastic resin laminate coextruded from the T-die 11 is cooled by using the first to third cooling rolls 12 to 14 and pulled out by the pair of take-off rolls 15. In the example shown in Fig. 3, the third cooling roll 14 is the "last cooling roll around which the thermoplastic resin laminate is wound (hereinafter also simply referred to as the last cooling roll)".

A fourth cooling roll and a subsequent cooling roll(s) may be disposed behind and adjacent to the third cooling roll 14. In such a case, the cooling roll on which the thermoplastic resin laminate is wound last becomes the "last cooling roll". Note that a conveying roll(s) may be disposed between the plurality of cooling rolls adjacent to each other and the take-off roll as desired. However, the conveying roll(s) is not included in the "cooling rolls".

The term "retardation" means a phase difference between light in the direction of the molecular main chain and light in the direction perpendicular thereto. In general, a polymer can have an arbitrary shape as it is heat-melt molded. However, it is known that molecules are oriented by a stress that occurs during the heating and cooling processes and hence retardation occurs. Therefore, in order to control the retardation, it is necessary to control the orientation of molecules. Molecules are orientated, for example, by a stress that occurs when the polymer is molded at or near its glass transition temperature (Tg). Note that in this specification, the term "retardation" means in-plane retardation unless otherwise specified.

It is possible to optimize an Re value of a molded extruded resin plate by optimizing manufacturing conditions and thereby controlling the orientation of molecules in the extrusion molding process, and also to suppress thermal changes in the Re value by doing so. The Re value of at least a part of the extruded resin plate in the width direction is preferably 50 to 330 nm both before and after the heating, and a decreasing rate of the Re value of the extruded resin plate after the heating to the decreasing rate thereof before the heating is 30% or lower.

Preferred manufacturing conditions for adjusting the Re value and its thermal change rate to suitable ranges will be described hereinafter.

<Temperature of Thermoplastic Resin Laminate in Extrusion Molding>

The overall temperature of a thermoplastic resin laminate at the time when the thermoplastic resin laminate is sandwiched between a second cooling roll and a third cooling roll is represented as a temperature (TX), and the overall temperature of the thermoplastic resin laminate at a place where the thermoplastic resin laminate is separated from the last cooling roll (in Fig. 3, the third cooling roll) is represented as a temperature (TT).

In a Manufacturing Condition 1, the temperature (TX) is adjusted to a temperature that is equal to or higher than a temperature 10°C lower than a glass transition temperature of the polycarbonate containing layer (Tg(PC)) and is lower than a temperature 10°C higher than the glass transition temperature (Tg(PC)). Further, the temperature (TT) is adjusted to a temperature that is lower than a temperature 10°C lower than the glass transition temperature of the polycarbonate containing layer (Tg(PC)).

In a Manufacturing Condition 2, the temperature (TX) is adjusted to a temperature that is equal to or higher than a temperature 10°C higher than the glass transition temperature of the polycarbonate containing layer (Tg(PC)), and the temperature (TT) is adjusted to a temperature that is equal to or higher than a temperature 10°C lower than the glass transition temperature of the polycarbonate containing layer (Tg(PC)).

In a Manufacturing Condition 3, the temperature (TX) is adjusted to a temperature that is equal to or higher than a temperature 10°C lower than a glass transition temperature of the polycarbonate containing layer (Tg(PC)) and is lower than a temperature 10°C higher than the glass transition temperature (Tg(PC)). Further, the temperature (TT) is adjusted to a temperature that is equal to or higher than a temperature 10°C lower than the glass transition temperature of the polycarbonate containing layer (Tg(PC)).

Note that the temperatures (TX) and (TT) can be measured by a method described in the [EXAMPLE] section shown later.

<Relation between Circumferential Speed Ratio and Re Value>

In this specification, the "circumferential speed ratio" means a ratio of the circumferential speed of a given cooling roll other than the second cooling roll, or the take-off roll to that of the second cooling roll. The circumferential speed of the second cooling roll is represented by V2; the circumferential speed of the third cooling roll is represented by V3; and the circumferential speed of the take-up roll is represented by V4.

Under the above-described Manufacturing Condition 1, there is a tendency that the Re value increases and the decreasing rate of the Re value after the heating decreases as the circumferential speed ratio (V3/V2) is increased. It is inferred that the above-described phenomenon occurs because the resin temperature (TX) at the time when the stress is applied is close to the glass transition temperature of the polycarbonate containing layer (Tg(PC)).

Further, under the Manufacturing Condition 1, there is a tendency that the Re value increases but the decreasing rate of the Re value after the heating increases as the circumferential speed ratio (V4/V2) of the take-off roll is increased. It is inferred that the above-described phenomenon occurs because the resin temperature (TT) at the time when the stress is applied is lower than the glass transition temperature of the polycarbonate containing layer (Tg(PC)) (i.e., is lower than a temperature expressed as "Tg(PC))-10°C").

Under the Manufacturing Condition 2, the Re value does not significantly increase even when the circumferential speed ratio (V3/V2) is increased. It is inferred that the above-described phenomenon occurs because the resin temperature (TX) at the time when molecules are oriented is higher than the glass transition temperature of the polycarbonate containing layer (Tg(PC)) (i.e., is equal to or higher than a temperature expressed as "Tg(PC))+10°C").

Further, under the Manufacturing Condition 2, there is a tendency that the Re value increases and the decreasing rate of the Re value after the heating decreases as the circumferential speed ratio (V4/V2) of the take-off roll is increased. It is inferred that the above-described phenomenon occurs because the resin temperature (TT) at the time when the stress is applied is equal to or higher than a temperature close to the glass transition temperature of the polycarbonate containing layer (Tg(PC)) (i.e., is equal to or higher than a temperature expressed as "Tg(PC))-10°C").

Under the above-described Manufacturing Condition 3, there is a tendency that the Re value increases and the decreasing rate of the Re value after the heating decreases as the circumferential speed ratio (V3/V2) is increased. It is inferred that the above-described phenomenon occurs because the resin temperature (TX) at the time when the stress is applied is close to the glass transition temperature of the polycarbonate containing layer (Tg(PC)).

Further, under the Manufacturing Condition 3, there is a tendency that the Re value increases and the decreasing rate of the Re value after the heating decreases as the circumferential speed ratio (V4/V2) of the take-off roll is increased. It is inferred that the above-described phenomenon occurs because the resin temperature (TT) at the time when the stress is applied is equal to or higher than a temperature close to the glass transition temperature of the polycarbonate containing layer (Tg(PC)) (i.e., is equal to or higher than a temperature expressed as "Tg(PC))-10°C").

From the above-described findings, it can be understood that in the case in which the resin temperature (TX) is controlled to a temperature range that is equal to or higher than a temperature 10°C lower than the glass transition temperature of the polycarbonate containing layer (Tg(PC)) and is lower than a temperature 10°C higher than the glass transition temperature (Tg(PC)), it is possible to control the Re value and the decreasing rate of the Re value after the heating by adjusting the circumferential speed ratios (V3/V2) and (V4/V2) to suitable ranges. Further, it can be understood that in the case in which the resin temperature (TT) is controlled to a temperature equal to or higher than a temperature 10°C lower than the glass transition temperature of the polycarbonate containing layer (Tg(PC)), it is possible to control the Re value and the decreasing rate of the Re value after the heating by adjusting the circumferential speed ratio (V4/V2) to a suitable range.

Specifically, under the Manufacturing Condition 1 in which the temperature (TX) is adjusted to a temperature that is equal to or higher than a temperature 10°C lower than the temperature (Tg(PC)) and is lower than a temperature 10°C higher than the temperature (Tg(PC)), the circumferential speed ratio (V3/V2) is preferably adjusted to a value no lower than 1.00 and no higher than 1.01 and the circumferential speed ratio (V4/V2) is preferably adjusted to a value no lower than 0.98 and lower than 1.00. When the circumferential speed ratio (V3/V2) is higher than 1.01, the Re value may exceed 330 nm. When the circumferential speed ratio (V3/V2) is lower than 1.00, the Re value may become less than 50 nm. When the circumferential speed ratio (V4/V2) is 1.00 or higher, the Re value may exceed 330 nm and the decreasing rate of the Re value may exceed 30%. When the circumferential speed ratio (V4/V2) is lower than 0.98, there is a possibility that the resin plate that is in contact with the last cooling roll cannot maintain the tight contact state with the cooling roll due to a lack of the tension and is separated from the cooling roll, and hence its fine surface state cannot be maintained. In order to optimize the Re value, the circumferential speed ratio (V3/V2) is more preferably 1.002 to 1.006 and the peripheral speed (V4/V2) is more preferably 0.985 to 0.995.

Under the Manufacturing Condition 2 in which the temperature (TX) is adjusted to a temperature equal to or higher than a temperature 10°C higher than the temperature (Tg(PC)) and the temperature (TT) is adjusted to a temperature equal to or higher than a temperature 10°C lower than the temperature (Tg(PC)), the circumferential speed ratio (V4/V2) is preferably adjusted to a value no lower than 0.98 and lower than 1.00. When the circumferential speed ratio (V4/V2) is 1.00 or higher, the Re value may exceed 330 nm. When the circumferential speed ratio (V4/V2) is lower than 0.98, the Re value may become less than 50 nm. In order to optimize the Re value, the circumferential speed ratio (V4/V2) is more preferably 0.985 to 0.995.

<Heating Condition>

The heating conditions for evaluating the decreasing rate of the Re value of the extruded resin plate may be as follows: a constant temperature within a range of 75 to 100°C and a constant time within a range of 1 to 30 hours. For example, an evaluation may be made under the condition of 75°C and 5 hours, or 100°C and 5 hours. For example, an evaluation may be made by heating a test piece for 5 hours in an oven whose temperature is maintained at 100°C ±3°C or 75°C ±3°C. Note that in the above-described heating condition, the heating temperature and the heating time in an ordinary process for forming a cured film are taken into consideration. Therefore, it is preferred that the Re value can be maintained within a suitable range when an evaluation is made by performing heating under the above-described conditions.

According to the manufacturing method in accordance with the present disclosure, it is possible to manufacture an extruded resin plate in which: the glass transition temperature Tg(M) of the methacrylic-resin containing layer is 110°C or higher; when the extruded resin plate is heated for 5 hours at a constant temperature within a range of 75 to 100°C, the Re value of at least a part of the extruded resin plate in the width direction is 50 to 330 nm and preferably 80 to 250 nm both before and after the heating; and the decreasing rate of the Re value after the heating to the decreasing rate thereof before the heating is 30% or lower and preferably 15% or lower.

(Step (Y)

In order to provide the above-described characteristics more stably and thereby to obtain an extruded resin plate suitable as a protective plate or the like for a flat panel display such as a liquid crystal display, a touch panel, or the like more stably, it is possible to perform, after the step (X), a step (Y) in which the extruded resin plate is heated at a temperature of 65 to 110°C for 1 to 30 hours.

In this case, preferably, the Re value of at least a part of the extruded resin plate in the width direction is 50 to 330 nm and preferably 80 to 250 nm both before and after the step (Y); and the decreasing rate of the Re value of the extruded resin plate after the step (Y) to the decreasing rate thereof before the step (Y) is 30% or lower and preferably 15% or lower.

An extruded resin plate according to the present invention is suitable as a protective plate or the like for a flat panel display such as a liquid crystal display and a touch panel.

The extruded resin plate according to the present invention is excellent in luster, abrasion resistance, and impact resistance because the methacrylic-resin containing layer is laminated on at least one surface of the polycarbonate containing layer.

In the extruded resin plate according to the present invention, the linear expansion rate ratio (SR) is from -10% to +10% and the glass transition temperature (Tg(M)) of the methacrylic-resin containing layer is 110°C or higher. As a result, it is possible to prevent warping from occurring due to a thermal change. Since the extruded resin plate according to the present invention is less prone to warping caused by a thermal change and thermal changes in its Re value is small, it is resistant to heating and a high-temperature use environment in a process for forming a cured film that functions as an abrasion resistant layer or the like. Therefore, the extruded resin plate is excellent in productivity and durability.

When an extruded resin plate according to the present invention is used as a protective plate or the like for a flat panel display such as a liquid crystal display, a touch panel, or the like, the screen is sufficiently bright and visibility is excellent even when a black color is displayed or even under an environment in which a polarizing filter is used. Since a sufficient transmittance to infrared light is ensured in the extruded resin plate according to the present invention, it can be suitably used in a car navigation system equipped with an infrared sensor.

[Use]

The extruded resin plate according to the present invention is suitable as a protective plate or the like for a flat panel display such as a liquid crystal display, a touch panel or the like. For example, the extruded resin plate is suitable as a protective plate for a flat panel display such as a liquid crystal display, a touch panel or the like used in ATMs of financial institutions such as banks; vending machines; and digital information devices such as mobile phones (including smart phones), portable information terminals (PDAs) such as tablet-type personal computers, digital audio players, portable game machines, copying machines, facsimile machines, and car navigation systems.

**Example**

Examples according to the present invention and comparative examples will be described. Examples 6 and 9 are reference embodiments, not according to the invention.

[Evaluation Items and Evaluation Methods]

The evaluation items and the evaluation methods are as follows.

(Copolymerization Composition of SMA Resin)

Copolymerization composition of an SMA resin was determined by a $^{13}$C-NMR method by using a nuclear magnetic resonance apparatus ("GX-270" manufactured by JEOL Ltd.) according to the following procedure.

A sample solution was prepared by dissolving 1.5 g of an SMA resin in 1.5 ml of deuterated chloroform and a $^{13}$C-NMR spectrum was measured in a room-temperature environment under the condition that the number of accumulations was 4,000 to 5,000. As a result, the following values were obtained.

- [Integrated intensity of carbon peak (around 127, 134, 143 ppm) of benzene ring (carbon number 6) in styrene unit]/6
- [Integrated intensity of carbon peak (around 170 ppm) at carbonyl site (carbon number 2) in maleic anhydride unit]/2

- [Integrated intensity of carbon peak (around 175 ppm) at carbonyl site (carbon number 1) in MMA unit]/1

From the area ratio among the above-shown values, a molar ratio among the styrene unit, the maleic anhydride unit, and the MMA unit in the sample was determined. The mass composition of each monomer unit in the SMA resin was determined from the obtained molar ratio and the mass ratio of that monomer unit (styrene unit: maleic anhydride unit: MMA unit = 104: 98: 100).

(Weight Average Molecular Weight (Mw))

The molecular weight Mw of the resin was determined by a GPC method according to the following procedure. Tetrahydrofuran was used as an eluent. Further, two "TSKgel SuperMultipore HZM-M" and one "SuperHZ4000" manufactured by Tosoh Corporation were connected in series and used as a column. HLC-8320 (product number) equipped with a differential refractive index detector (an RI detector) manufactured by Tosoh Corporation was used as a GPC apparatus. A sample solution was prepared by dissolving 4 mg of a resin in 5 ml of tetrahydrofuran. The temperature of a column oven was set to 40°C. Further, a chromatogram was measured by injecting 20 $\mu$l of the sample solution at the rate of 0.35 ml/min as an eluent flow. Ten samples of polystyrene standards having molecular weights in a range of 400 to 5,000,000 were measured by the GPC and a calibration curve indicating a relation between retention time and molecular weights was created. The molecular weight Mw was determined based on this calibration curve.

(Glass Transition Temperature (Tg) of Each Layer)

The glass transition temperature (Tg) of each layer was measured by putting 10 mg of a constituent resin (a composition) in an aluminum pan and using a differential scanning calorimeter ("DSC-50" manufactured by Rigaku Corporation). After performing a nitrogen substitution for 30 minutes or longer, in a nitrogen gas flow of 10 ml/min, primarily, the temperature was raised from 25°C to 200°C at a rate of 20°C/min, maintained at the raised temperature for 10 minutes, and cooled to 25°C (primary scanning). Next, the temperature was raised to 200°C at a rate of 10°C/min (secondary scanning). The glass transition temperature (Tg) was calculated from a result obtained by the secondary scanning by a midpoint method. Note that when a plurality of Tg data are obtained for a resin composition containing at least two types of resins, a value derived from the resin constituting the main component was used as Tg data.

(Linear Expansion Rate of Each Layer and Linear Expansion Rate Ratio)

The linear expansion rate is defined as a rate of a change in length per unit temperature change. The linear expansion rate of each layer was measured in accordance with JIS K7197 by using a thermomechanical analyzer ("TMA 4000" manufactured by Brooker AXS Ltd.). That is, for each layer, a press-molded resin plate having the same composition was obtained. Further, a sample having a quadrangular prism shape with a base of 5 mm $\times$ 5 mm and a height of 10 mm was cut out from the press-molded resin plate by using a diamond saw to form a smooth end surface. The obtained sample was placed on a quartz plate so that the surface of 5 mm $\times$ 5 mm is in contact with the quartz plate. Further, the sample is fixed to the quartz plate by placing a cylindrical rod on the sample and applying a compressive load of 5 g thereto. Next, under an air atmosphere, the temperature was raised from 25°C (the room temperature) to a temperature 10°C lower than the glass transition temperature (Tg) of the sample at a temperature raising rate of 3°C/min, and then cooled to 25°C (primary scanning). Next, the temperature was raised from 25°C (the room temperature) to a temperature 20°C higher than the glass transition temperature (Tg) of the sample at a temperature raising rate of 3°C/min (secondary scanning). The linear expansion rate at each temperature during the above-described secondary scanning was measured and an average linear expansion rate in a range of 30 to 80°C was obtained. The linear expansion rate ratio (SR) was obtained from the linear expansion rate of each layer.

(Overall Temperature of Thermoplastic Resin Laminate (TT))

The overall temperature of the thermoplastic resin laminate (TT) at the place where it was separated from the last cooling roll (specifically, the third cooling roll) was measured by using an infrared thermometer. The measurement point was the center of the extruded resin plate in the width direction.

(Overall Temperature of Thermoplastic Resin Laminate (TX))

It is very difficult to measure the overall temperature of the thermoplastic resin laminate (TX) directly by using an infrared thermometer when the thermoplastic resin laminate is sandwiched between the second and third cooling rolls because it is blocked by the pair of rolls. Therefore, the overall temperature of the thermoplastic resin laminate immediately before it is transferred from the second cooling roll to the third cooling roll and the overall temperature thereof immediately after it is transferred to the third cooling roll were measured by using an infrared thermometer. The measurement point was the center of the extruded resin plate in the width direction. An average value of the temperature immediately before the transfer to the third cooling roll and the temperature immediately after the transfer thereto was obtained as the temperature TX.

(Transmittance to Visible Light and Transmittance to Infrared Light of Extruded Resin Plate)

A rectangular test piece having a short side of 50 mm and a long side of 50 mm was cut out from an extruded resin plate.

Values of transmittance of the above-described test piece to the total light, measured in accordance with JIS K 7361-1 by using a haze meter (HM-150 manufactured by Murakami Color Research Laboratory Co., Ltd.) were defined as transmittance to visible light.

Values of transmittance of the above-described test piece at a wavelength of 800 nm that was measured by using an ultraviolet/visible/near infrared spectrophotometer (UV-3600 manufactured by Shimadzu Corporation) were defined as transmittance to infrared light.

(Amount of Warping of Extruded Resin Plate)

A rectangular test piece having a short side of 100 mm and a long side of 200 mm was cut out from an extruded resin plate. Note that the short-side direction was parallel to the extruding direction and the long-side direction was perpendicular to the extruding direction (i.e., parallel to the width direction). The obtained test piece was placed on a glass surface plate so that the upper surface in the extrusion molding became the uppermost surface, and was left as it is in an environment of a temperature of 23°C and a relative humidity of 50% for 24 hours. After that, the maximum value of the gap between the test piece and the surface plate was measured by using a feeler gauge, and the measured maximum value was used as an initial amount of warping. Next, in an environmental test apparatus, the test piece was placed on a glass surface plate so that the upper surface in the extrusion molding became the uppermost surface. Then the placed test piece was left as it is in an environment of a temperature of 85°C and a relative humidity of 85% for 72 hours and then left as it is in an environment of a temperature of 23°C and a relative humidity of 50% for 4 hours. After that, an amount of warping was measured in the same manner as the initial stage and the obtained value was used as amount of warping after the high-temperature and high-humidity state. Note that in the test piece, which was placed on the surface plate so that the upper surface in the extrusion molding became the uppermost surface, the sign of the amount of warping was defined as "positive" when upward convex warping occurred and was defined as "negative" when downward convex warping occurred.

(In-plane Retardation (Re) Value of Extruded Resin Plate and Its Decreasing Rate)

A 100 mm square test piece was cut out from the extruded resin plate by using a running saw. This test piece was heated for 5 hours in an oven whose temperature was maintained at $100 \pm 3$°C. The Re value was measured both before and after the heating as follows. The test piece was left as it is in an environment of 23°C $\pm 3$°C for 10 minutes or longer and then the Re value was measured by using "WPA-100(-L)" manufactured by Photonic Lattice, Inc. The measured point was the center of the test piece. The decreasing rate of the Re value between before and after the heating was determined from the below-shown Expression.

$$[\text{Decreasing rate of Re value (\%)}]$$
$$= ([\text{Re value before heating}]-[\text{Re value after heating}])/[\text{Re value before heating}]\times 100$$

(Visibility When Polarized Sunglasses Are Worn)

A 100 mm square test piece was cut out from an extruded resin plate by using a running saw. This test piece was heated for 5 hours in an oven whose temperature was maintained at 100°C $\pm 3$°C. Next, a color liquid crystal display was positioned in a place 35 cm away from eyes and an image was displayed on the display. Then, a test piece, which was heated beforehand, was disposed in front of the liquid crystal display, in particular, disposed in a place 30 cm away from the eyes. Further, the test piece was disposed parallel to the screen of the liquid crystal display.

Firstly, the image was visually observed through the test piece in the thickness direction thereof without wearing polarized sunglasses. Next, the image was visually observed in the same manner as described above while keeping the face facing the image and tilting the head to the left and right in a state where the polarizing sunglasses were worn. Visibility was evaluated according to the following criteria.

∘ (Good): There was no significant change in the appearance of the image irrespective of the presence or absence of the polarized sunglasses, and the image was able to be viewed without any problem irrespective of the presence or absence of the polarized sunglasses.
× (Defective): When the neck was tilted at a certain angle in the state where the polarizing sunglasses were worn, the image was darkened or dark coloring appeared and hence the visibility of the image deteriorated.

(Visibility of Black Color)

A 100 mm square test piece was cut out from an extruded resin plate by using a running saw. Next, a color liquid crystal display was positioned in a place 35 cm away from eyes and an image was displayed on the display. Further, a 100 mm square colorless transparent resin piece, which served as a reference resin piece, and the above-described test piece were arranged side by side in front of the liquid crystal display. In order to maintain the evaluation environment unchanged, an illuminometer was disposed in front of the transparent resin piece and the test piece and the illuminance in the room was adjusted so that the value of the illuminometer became 500 lx. Then, the image was visually observed and the visibility was evaluated according to the following criteria.

∘ (Good): Visibility of the black image as viewed though the test piece was improved as compared to the colorless transparent resin piece, which was used as the reference.
× (Defective): Visibility of the black image as viewed though the test piece was unchanged as compared to the colorless transparent resin piece, which was used as the reference.

[Material]

Used materials were as follows.

<Methacrylic Resin (A)>

(A1) Polymethyl methacrylate (PMMA), "Parapet (Registered Trademark) HR" manufactured by Kuraray Co., Ltd. (MFR at temperature 230°C under 3.8 kg load = 2.0 g/10 min).

<Methacrylic Resin (B)>

The below-shown copolymers of MMA and 8-tricyclo [5. 2. 1. $0^{2, 6}$] decanyl methacrylate (TCDMA) were prepared. Note that a TC ratio indicates a loading ratio (mass%) of TCDMA to the total amount of the MMA and the TCDMA. (B2) MMA/TCDMA copolymer (TC ratio 35 mass%, Tg = 130°C, linear expansion rate = $7.10 \times 10^{-5}$/K).

<SMA Resin>

(SMA1) An SMA resin (styrene-maleic anhydride-MMA copolymer, styrene unit/maleic anhydride unit/MMA unit (mass ratio) = 56/18/26, Mw = 150,000, Tg = 138°C, linear expansion rate = $6.25 \times 10^{-5}$/K) was obtained according to a method described in International Patent Publication No. WO2010/013557.

<Resin Composition (MR)>

The below-shown three kinds of resin compositions were obtained by mixing the methacrylic resin (A1) and the SMA resin (SMA1). Note that an SMA ratio indicates a loading ratio (mass%) of the SMA resin (S1) to the total amount of the methacrylate resin (A1) and the SMA resin (S1).

(MR1) (A1)/(S1) resin composition (SMA ratio: 20 mass%, Tg = 120°C, linear expansion rate = $7.28 \times 10^{-5}$/K),
(MR2) (A1)/(S1) resin composition (SMA ratio: 50 mass%, Tg = 130°C, linear expansion rate = $6.87 \times 10^{-5}$/K),
(MR3) (A1)/(S1) resin composition (SMA ratio: 70 mass%, Tg = 132°C, linear expansion rate = $6.59 \times 10^{-5}$/K).

<Polycarbonate (PC)>

(PC1) "SD Polyca (Registered Trademark) PCX" manufactured by Sumika Styron Polycarbonate Limited (MFR at temperature 300°C under 1.2 kg load = 6.7 g/10 min, Tg = 150°C, linear expansion rate = $6.93 \times 10^{-5}$/K).

<Master Pellet Containing Coloring Material>

(MP1)

Master pellets (MP1) that exhibited a black color were manufactured by mixing polycarbonate (PC1) (100 pts.mass), a green organic dye (Macrolex Green 5B) (0.08 pts.mass), a red organic dye (Diaresin Red S) (0.09 pts.mass), and a yellow organic dye (Macrolex Yellow 3G) (0.02 pts.mass) by using a 50 mmφ single-screw extruder.

(MP2)

Master pellets (MP2) that exhibited a black color were manufactured by mixing polycarbonate (PC1) (100 pts.mass) and carbon black (0.02 pts.mass) by using a 50 mmφ single-screw extruder.

In each of the later-described Examples and Comparative Examples, a semitransparent black polycarbonate containing layer was formed by using a material that was obtained by adding the master pellets (MP1) or the master pellets (MP2) containing a coloring material at a relatively high concentration in the polycarbonate (PC1). Note that the light transmittances of extruded resin plates were adjusted by changing the type and/or the amount of the added master pellets.

[Example 1] (Manufacturing of Extruded Resin Plates)

Extruded resin plates were molded by using a manufacturing apparatus as shown in Fig. 3.

A methacrylic resin (A1) melted by using a 65 mmφ single-screw extruder (manufactured by Toshiba Machine Co., Ltd.), a polycarbonate (PC1) which was melted by using a 150 mmφ single-screw extruder (manufactured by Toshiba Machine Co., Ltd.) and in which 18 mass% of master pellets (MP1) was added, and a methacrylic resin (A1) melted by using a 65 mmφ single-screw extruder (manufactured by Toshiba Machine Co., Ltd.) were laminated through a multi-manifold die, and a thermoplastic resin laminate having a three-layered structure in a molten state was coextruded from a T-die.

Next, the molten thermoplastic resin laminate was cooled by sandwiching the laminate between a first cooling roll and a second cooling roll adjacent to each other, winding the laminate around the second cooling roll, sandwiching the laminate between the second cooling roll and a third cooling roll, and winding the laminate around the third cooling. An extruded resin plate obtained after the cooling was pulled out by a pair of take-off rolls. The overall temperature of the thermoplastic resin laminate (TX) when the laminate was sandwiched between the second and third cooling rolls was adjusted to 150°C by controlling the temperatures of the second and third cooling rolls. The overall temperature of the thermoplastic resin laminate (TT) at the place where the laminate was separated from the third cooling roll was adjusted to 125°C by controlling the temperatures of the second and third cooling rolls. The circumferential speed ratio (V3/V2) between the second and third cooling rolls was adjusted to 1.003, and the circumferential speed ratio (V4/V2) between the second cooling roll and the take-off roll was adjusted to 0.990.

In this way, a semitransparent black extruded resin plate having a three-layered structure having a laminated structure of (methacrylic-resin containing layer (surface layer 1))/(polycarbonate containing layer (inner layer))/(methacrylic-resin containing layer (surface layer 2)) was obtained. The thickness of each of the methacrylic resin-containing layers constituting the surface layers 1 and 2 was 0.05 mm and the thickness of the polycarbonate containing layer was 0.40 mm. Further the overall thickness of the extruded resin plate was 0.5 mm. The obtained extruded resin plate was evaluated.

Tables 1-1 and 2-1 show main manufacturing conditions and evaluation results of obtained extruded resin plates. Note that in the below-shown examples and comparative examples, in the case of the three-layered structure, the composition and the thickness of the surface layer 1 are the same as those of the surface layer 2. Further, other manufacturing conditions that are not shown in the tables are in common for all the examples and comparative examples.

[Examples 2 to 10]

A semitransparent black extruded resin plate having a three-layered structure having a laminated structure of (methacrylic-resin containing layer (surface layer 1))/(polycarbonate containing layer (inner layer))/ (methacrylic-resin containing layer (surface layer 2)) was obtained in the same manner as the Example 1 except that the composition and the manufacturing conditions of the methacrylic-resin containing layer were changed as shown in Table 1-1. Table 2-1 shows evaluation results of the extruded resin plate obtained in each example.

[Examples 11 to 21]

A semitransparent black extruded resin plate having a two-layered structure having a laminated structure of (methacrylic-resin containing layer (surface layer 1))/(polycarbonate containing layer (surface layer 2)) was obtained in the same manner as the Example 1 except that the composition and the manufacturing conditions of the methacrylic-resin containing layer were changed as shown in Table 1-2. Note that the lamination was performed so that the polycarbonate containing layer was in contact with the third cooling roll. Table 2-2 shows evaluation results of the extruded resin plate obtained in each example.

[Table 1-1]

| | Layer structure | | | | | | | SR | Overall thickness (mm) | TX (°C) | TT (°C) | V3/V2 | V4/V2 |
|---|---|---|---|---|---|---|---|---|---|---|---|---|---|
| | Surface layer 1 | | | Inner layer | | | Surface layer 2 | | | | | | |
| | | Tg (M) (°C) | Linear expansion rate (S2) ($10^{-5}$/K) | | MP1 Concentration | MP2 Concentration | | | | | | | |
| Example 1 | Methacrylic-resin containing layer (A1) | 110 | 7. 56 | PC1 | 18% | 0% | Same as surface layer 1 | +9% | 0.5 | 150 | 125 | 1. 003 | 0. 990 |
| Example 2 | Methacrylic-resin containing layer (A1) | 110 | 7. 56 | PC1 | 9% | 0% | Same as surface layer 1 | +9% | 1. 0 | 155 | 140 | 1. 001 | 0. 990 |
| Example 3 | Methacrylic-resin containing layer (A1) | 110 | 7. 56 | PC1 | 9% | 0% | Same as surface layer 1 | +9% | 1. 0 | 155 | 140 | 1. 001 | 0. 990 |
| Example 4 | Methacrylic-resin containing layer (A1) | 110 | 7. 56 | PC1 | 23% | 0% | Same as surface layer 1 | +9% | 1. 0 | 155 | 140 | 1. 001 | 0. 990 |
| Example 5 | Methacrylic-resin containing layer (MR3) (SMA ratio 70 mass%) | 132 | 6.59 | PC1 | 9% | 0% | Same as surface layer 1 | -5% | 1. 0 | 155 | 150 | 1. 001 | 0. 988 |
| Example 6 | Methacrylic-resin containing layer (A1) | 110 | 7. 56 | PC1 | 2% | 0% | Same as surface layer 1 | +9% | 1. 0 | 155 | 140 | 1. 001 | 0. 990 |
| Example 7 | Methacrylic-resin containing layer (A1) | 110 | 7. 56 | PC1 | 5% | 0% | Same as surface layer 1 | +9% | 2. 0 | 170 | 155 | 1. 000 | 0. 988 |
| Example 8 | Methacrylic-resin containing layer (A1) | 110 | 7. 56 | PC1 | 12% | 0% | Same as surface layer 1 | +9% | 2. 0 | 170 | 155 | 1. 000 | 0. 988 |

(continued)

| | Layer structure | | | | | | SR | Overall thickness (mm) | TX (°C) | TT (°C) | V3/V2 | V4/V2 |
|---|---|---|---|---|---|---|---|---|---|---|---|---|
| | Surface layer 1 | | | Inner layer | | Surface layer 2 | | | | | | |
| | | Tg (M) (°C) | Linear expansion rate (S2) $(10^{-5}/K)$ | | MP1 Concent ration | MP2 Concent ration | | | | | | | |
| Example 9 | Methacrylic-resin containing layer (A1) | 110 | 7. 56 | PC1 | 1% | 0% | Same as surface layer 1 | +9% | 2. 0 | 170 | 155 | 1. 000 | 0. 988 |
| Example 10 | Methacrylic-resin containing layer (MR3) (SMA ratio 70 mass%) | 132 | 6. 59 | PC1 | 5% | 0% | Same as surface layer 1 | -5% | 2. 0 | 180 | 165 | 1. 000 | 0. 985 |

[Table 1-2]

| | Layer structure | | | | | | | SR | Overall thickness (mm) | TX (°C) | TT (°C) | V3/V2 | V4/V2 |
|---|---|---|---|---|---|---|---|---|---|---|---|---|---|
| | Surface layer 1 | | | Inner laver | Surface layer 2 | | | | | | | | |
| | | Tg (M) (°C) | Linear expansion rate (S2) (10$^{-5}$/K) | | | MP1 Concent ration | MP2 Concent ration | | | | | | |
| Example 11 | Methacrylic-resin containing layer (A1) | 110 | 7. 56 | - | PC1 | 18% | 0% | +9% | 0. 5 | 150 | 139 | I 1. 003 | 0. 990 |
| Example 12 | Methacrylic-resin containing layer (A1) | 110 | 7. 56 | - | PC1 | 9% | 0% | +9% | 1. 0 | 155 | 145 | 1. 003 | 0. 990 |
| Example 13 | Methacrylic-resin containing layer (A1) | 110 | 7. 56 | - | PC1 | 9% | 0% | +9% | 2. 0 | 170 | 160 | 1. 000 | 0. 990 |
| Example 14 | Methacrylic-resin containing layer (B2) (MMA/ TCDMA, TC ratio 35 | 130 | 7. 10 | - | PC1 | 9% | 0% | +2% | 1. 0 | 160 | 150 | 1.000 | 0. 990 |
| Example 15 | Methacrylic-resin containing layer (MR1) (SMA ratio 20 mass%) | 120 | 7. 28 | - | PC1 | 9% | 0% | +5% | 1. 0 | 160 | 150 | 1. 000 | 0. 990 |
| Example 16 | Methacrylic-resin containing layer (MR2) (SMA ratio 50 mass%) | 130 | 6. 87 | - | PC1 | 9% | 0% | -1% | 1. 0 | 165 | 155 | 1. 000 | 0. 990 |
| Example 17 | Methacrylic-resin containing layer (MR3) (SMA ratio 70 mass%) | 132 | 6. 59 | - | PC1 | 9% | 0% | -5% | 1. 0 | 168 | 155 | 1. 000 | 0. 990 |
| Example 18 | Methacrylic-resin containing layer (SMA1) | 138 | 6. 25 | - | PC1 | 9% | 0% | -10% | 1. 0 | 170 | 158 | 1. 000 | 0. 990 |
| Example 19 | Methacrylic-resin containing layer (MR3) (SMA ratio 70 mass%) | 132 | 6. 59 | - | PC1 | 5% | 0% | -5% | 2. 0 | 180 | 162 | 1. 000 | 0. 990 |

EP 3 659 802 B1

| | Layer structure | | | | | | SR | Overall thickness (mm) | TX (°C) | TT (°C) | V3/V2 | V4/V2 |
|---|---|---|---|---|---|---|---|---|---|---|---|---|
| | Surface layer 1 | | | Inner laver | Surface layer 2 | | | | | | | |
| | | Tg (M) (°C) | Linear expansion rate (S2) (10⁻⁵/K) | | | MP1 Concent ration | MP2 Concent ration | | | | | | |
| Example 20 | Methacrylic-resin containing layer (MR3) (SMA ratio 70 mass%) | 132 | 6. 59 | - | PC1 | 5% | 0% | -5% | 2. 0 | 180 | 162 | 1. 000 | 0.985 |
| Example 21 | Methacrylic-resin containing layer (MR3) (SMA ratio 70 mass%) | 132 | 6. 59 | - | PC1 | 12% | 0% | -5% | 2. 0 | 180 | 162 | 1. 000 | 0.985 |

[Table 2-1]

| | Light transmittance to visible light | Light transmittance to infrared light | Warping (mm) | | Re (nm) | | Re decreasing rate | Visibility when polarized sunglasses are worn | Visibility of black color |
|---|---|---|---|---|---|---|---|---|---|
| | | | Initial | After high temperature and high humidity (85°C85RH) | Initial | After heating (100°C) | | | |
| Example 1 | 60% | 92% | 1. 0 | 1. 2 | 210 | 150 | 29% | ○ | ○ |
| Example 2 | 60% | 92% | 0. 7 | 0. 5 | 80 | 60 | 25% | ○ | ○ |
| Example 3 | 60% | 92% | 0. 8 | 0. 7 | 160 | 120 | 25% | ○ | ○ |
| Example 4 | 30% | 92% | 0. 8 | 0. 7 | 160 | 120 | 25% | △ | ○ |
| Example 5 | 60% | 92% | 0. 4 | 0. 3 | 150 | 130 | 13% | ○ | ○ |
| Example 6 | 85% | 92% | 0. 8 | 0. 7 | 160 | 120 | 25% | ○ | △ |
| Example 7 | 60% | 92% | 0. 2 | 0. 2 | 65 | 60 | 8% | ○ | ○ |
| Example 8 | 30% | 92% | 0. 2 | 0. 2 | 65 | 60 | 8% | △ | ○ |
| Example 9 | 85% | 92% | 0. 2 | 0. 2 | 65 | 60 | 8% | ○ | △ |
| Example 10 | 60% | 92% | 0. 1 | 0. 1 | 65 | 65 | 0% | ○ | ○ |

[Table 2-2]

| | Light transmittance to visible light | Light transmittance to infrared light | Warping (mm) | | Re (nm) | | Re decreasing rate | Visibility when polarized sunglasses are worn | Visibility of black color |
|---|---|---|---|---|---|---|---|---|---|
| | | | Initial | After high temperature and high humidity (85°C85RH) | Initial | After heating (100°C) | | | |
| Example 11 | 60% | 92% | 0.7 | -0.5 | 250 | 180 | 28% | ○ | ○ |
| Example 12 | 60% | 92% | 0.5 | -0.8 | 250 | 180 | 28% | ○ | ○ |
| Example 13 | 60% | 92% | 0.3 | -1.2 | 160 | 150 | 6% | ○ | ○ |
| Example 14 | 60% | 92% | 0.2 | -0.3 | 145 | 140 | 3% | ○ | ○ |
| Example 15 | 60% | 92% | 0.2 | -0.5 | 145 | 140 | 3% | ○ | ○ |
| Example 16 | 60% | 92% | 0.1 | -0.3 | 145 | 140 | 3% | ○ | ○ |
| Example 17 | 60% | 92% | 0.2 | 0.1 | 145 | 140 | 3% | ○ | ○ |
| Example 18 | 60% | 92% | 0.4 | 0.4 | 145 | 140 | 3% | ○ | ○ |
| Example 19 | 60% | 92% | 0.2 | 0.1 | 150 | 145 | 3% | ○ | ○ |
| Example 20 | 60% | 92% | 0.2 | 0.1 | 60 | 60 | 0% | ○ | ○ |
| Example 21 | 30% | 92% | 0.2 | 0.1 | 60 | 60 | 0% | △ | ○ |

EP 3 659 802 B1

[Comparative Examples 1 to 6]

In each of Comparative Examples 1-6, a semitransparent black extruded resin plate having a three-layered structure having a laminated structure of (methacrylic-resin containing layer (surface layer 1))/(polycarbonate containing layer (inner layer))/(methacrylic-resin containing layer (surface layer 2)) or a two-layered structure having a laminated structure of (methacrylic-resin containing layer (surface layer 1))/(polycarbonate containing layer (surface layer 2)) was obtained in the same manner as the Examples 1 to 21 except that the composition and the manufacturing conditions of the methacrylic-resin containing layer were changed as shown in Table 3. Table 4 shows evaluation results of the extruded resin plate obtained in each example.

[Table 3]

EP 3 659 802 B1

28

| | Layer structure | | | | | | | | SR | Overall thickness (mm) | TX (°C) | TT (°C) | V3/V2 | V4/V2 |
|---|---|---|---|---|---|---|---|---|---|---|---|---|---|---|
| | Surface layer 1 | | | Inner layer | | | Surface layer 2 | | | | | | | |
| | | Tg(M) (°C) | Linear expansion rate (S2)(10^{-5}/K) | | MP1 Concentration | MP2 Concentration | | MP1 Concentration | MP2 Concentration | | | | | | |
| Comparative example 1 | Methacrylic-resin containing layer (Al) | 11.0 | 7. 56 | PC1 | 27% | 0% | Same as surface layer 1 | | - | +9% | 1.0 | 155 | 140 | 1.001 | 0. 990 |
| Comparative example 2 | Methacrylic-resin containing layer (Al) | 110 | 7. 56 | PC1 | 23% | 0% | Same as surface layer 1 | - | - | +9% | 1.0 | 155 | 140 | 0.999 | 0. 995 |
| Comparative example 3 | Methacrylic-resin containing layer (Al) | 110 | 7. 56 | PC1 | 0% | 15% | Same as surface layer 1 | - | - | +9% | 1.0 | 155 | 140 | 1.001 | 0. 990 |
| Comparative example 4 | Methacrylic-resin containing layer (A1) | 110 | 7. 56 | PC1 | 1% | 0% | Same as surface layer 1 | - | - | +9% | 1.0 | 155 | 140 | 1.001 | 0. 990 |
| Comparative example 5 | Methacrylic-resin containing layer (Al) | 110 | 7. 56 | - | | | PC1 | 9% | 0% | +9% | 1.0 | 1.50 | 139 | 0. 999 | 0. 995 |
| Comparative example 6 | Methacrylic-resin containing layer (MR3) (SMA ratio 70 mass%) | 132 | 6. 59 | - | | | PC1 | 9% | 0% | -5% | 1.0 | 168 | 155 | 1.000 | 0. 975 |

[Table 4]

| | Light transmittance to visible light | Light transmittance to infrared light | Warping (mm) | | Re (nm) | | Re decreasing rate | Visibility when polarized sunglasses are worn | Visibility of black color |
|---|---|---|---|---|---|---|---|---|---|
| | | | Initial | After high temperature and high humidity (85°C85RH) | Initial | After heating (100°C) | | | |
| Comparative example 1 | 25% | 92% | 0.8 | 0. 7 | 160 | 120 | 25% | × | ○ |
| Comparative example 2 | 30% | 92% | 0. 8 | 0.7 | 90 | 40 | 56% | × | ○ |
| Comparative example 3 | 50% | 65% | 0. 8 | 0. 7 | 160 | 120 | 25% | O | O |
| Comparative example 4 | 88% | 92% | 0.8 | 0.7 | 160 | 120 | 25% | ○ | × |
| Comparative example 5 | 60% | 92% | 0.7 | -0.5 | 100 | 40 | 60% | | |
| Comparative example 6 | 60% | 92% | 0. 2 | 0.1 | 30 | 27 | 10% | × | ○ |

[Summary of Results]

In the Examples 1 to 21, by adjusting conditions such as the temperature Tg of each layer, the linear expansion rate ratio (SR) of each layer, the overall temperature of the thermoplastic resin laminate (TX) when the laminate was sandwiched between the second and third cooling rolls, the overall temperature of the thermoplastic resin laminate (TT) at the place where the laminate was separated from the last cooling roll, the circumferential speed ratio (V3/V2), and the circumferential speed ratio (V4/V2), it was possible to manufacture an extruded resin plate which was less prone to warping caused by a thermal change, had an Re value within a suitable range and its decreasing rate within a suitable range, and had excellent visibility when polarized sunglasses were worn. Further, by using three types of organic dyes that exhibit a black color in combination as coloring materials and adjusting the amounts of these added organic dyes, it was possible to manufacture an extruded resin plate that was excellent in transmittance to visible light, transmittance to infrared light, visibility when polarized sunglasses were worn, and visibility of a black color.

In the Comparative Example 1, since the amounts of the three types of added organic dyes that exhibit a black color in combination was large, the transmittance to visible light was low, i.e., lower than 30% and hence the visibility when polarized sunglasses were worn was poor.

In the Comparative Example 2, under the Manufacturing Condition 3 in which the temperature (TX) was adjusted to a temperature that is equal to or higher than a temperature 10°C lower than the temperature (Tg(PC)) and is lower than a temperature 10°C higher than the temperature (Tg(PC)) and the temperature (TT) is adjusted to a temperature equal to or higher than a temperature 10°C lower than the temperature (Tg(PC)), the circumferential speed ratio (V3/V2) was adjusted to a value less than 1.00. As a result, the decrease rate of the Re value increased and the Re value after the heating became less than 50 nm. Therefore, the visibility when polarized sunglasses were worn was poor.

In the Comparative Example 3, since carbon black, which is an inorganic pigment, was used as the coloring material that exhibits a black color, the transmittance to infrared light was low, i.e., lower than 70%.

In the Comparative Example 4, since the amounts of the three types of added organic dyes that exhibit a black color in combination was small, the transmittance to visible light was high and hence the visibility of a black color was poor.

In the Comparative Example 5, under the Manufacturing Condition 1 in which the temperature (TX) was adjusted to a temperature that is equal to or higher than a temperature 10°C lower than the temperature (Tg(PC)) and is lower than a temperature 10°C higher than the temperature (Tg(PC)) and the temperature (TT) is adjusted to a temperature lower than a temperature 10°C lower than the temperature (Tg(PC)), the circumferential speed ratio (V3/V2) was adjusted to a value less than 1.00. As a result, the decrease rate of the Re value increased and the Re value after the heating became less than 50 nm. Therefore, the visibility when polarized sunglasses were worn was poor.

In the Comparative Example 6, under the Manufacturing Condition 2 in which the temperature (TX) was adjusted to a temperature that is equal to or higher than a temperature 10°C higher than the temperature (Tg(PC)) and the temperature (TT) is adjusted to a temperature equal to or higher than a temperature 10°C lower than the temperature (Tg(PC)), the circumferential speed ratio (V4/V2) was adjusted to a value less than 0.98. As a result, the Re value became less than 50 nm and hence the visibility when polarized sunglasses were worn was poor.

**Reference Signs List**

11    T-DIE
12    FIRST COOLING ROLL
13    SECOND COOLING ROLL
14    THIRD COOLING ROLL
15    TAKE-OFF ROLL
16    EXTRUDED RESIN PLATE

**Claims**

1.  An extruded resin plate (16X, 16Y) in which a layer containing a methacrylic resin (22, 22A, 22B) is laminated on at least one surface of a layer containing a polycarbonate (21), wherein

    the extruded resin plate (16X, 16Y) contains, on a surface of and/or inside the extruded plate (16X, 16Y), at least one type of a coloring material that exhibits a black color, or a plurality of types of coloring materials that exhibit a black color in combination,
    the glass transition temperature of the layer containing the methacrylic resin (22, 22A, 22B) is 110°C or higher, as determined according to the method indicated in the description,

when the extruded resin plate (16X, 16Y) is heated for 5 hours at a constant temperature within a range of 75 to 100°C, the in-plane retardation value of at least a part of the extruded resin plate (16X, 16Y) in a width direction is 50 to 330 nm both before and after the heating, as determined according to the method indicated in the description,

the decreasing rate of the retardation value after the heating to the decreasing rate thereof before the heating is 30% or lower, as determined according to the method indicated in the description,

the light transmittance in wavelengths of 400 to 650 nm is 30 to 70% and the light transmittance in wavelengths of 700 to 1,000 nm is 70% or higher, as determined according to JIS K 7361-1, and

the ratio ((S2-S1)/S1) which is composed of the difference (S2-S1) between a linear expansion rate (S1) of the layer containing the polycarbonate (21) and the linear expansion rate (S2) of the layer containing the methacrylic resin (22, 22A, 22B) and the linear expansion rate (S1) of the layer containing the polycarbonate (21) is between -10% and +10%, as determined according to the method indicated in the description.

2. The extruded resin plate (16X, 16Y) according to Claim 1, containing at least one type of an organic dye exhibiting a black color or a plurality of types of organic dyes that exhibit a black color in combination on a surface of and/or inside the extruded resin plate (16X, 16Y).

3. The extruded resin plate (16X, 16Y) according to Claim 1 or 2, wherein the methacrylic resin contains 40 to 80 mass% of a structural unit derived from methyl methacrylate and 60 to 20 mass% of a structural unit derived from an methacrylic acid polycyclic aliphatic hydrocarbon ester.

4. The extruded resin plate (16X, 16Y) according to Claim 1 or 2, wherein the layer containing the methacrylic resin (22, 22A, 22B) contains 5 to 80 mass% of a methacrylic resin and 95 to 20 mass% of a copolymer containing a structural unit derived from an aromatic vinyl compound and a structural unit derived from maleic anhydride.

5. The extruded resin plate (16X, 16Y) according to Claim 4, wherein the copolymer contains 50 to 84 mass% of a structural unit derived from the aromatic vinyl compound, 15 to 49 mass% of a structural unit derived from maleic anhydride, and 1 to 35 mass% of a structural unit derived from a methacrylic acid ester.

6. The extruded resin plate (16X, 16Y) according to Claim 5, wherein the methacrylic acid ester is methyl methacrylate.

7. The extruded resin plate (16X, 16Y) according to any one of Claims 1 to 6, wherein
the light transmittance in wavelengths of 700 to 1,000 nm is 80% or higher, as determined according to JIS K 7361-1.

8. The extruded resin plate (16X, 16Y) according to any one of Claims 1 to 7, wherein the in-plane retardation value of at least the part of the extruded resin plate plat (16X, 16Y)e in the width direction is 80 to 250 nm both before and after the heating, as determined according to the method indicated in the description.

9. The extruded resin plate (16X, 16Y) according to any one of Claims 1 to 8, wherein the decreasing rate of the retardation value after the heating to the decreasing rate thereof before the heating is 15% or lower, as determined according to the method indicated in the description.

10. The extruded resin plate (16X, 16Y) according to any one of Claims 1 to 9, further comprising an abrasion resistant layer on at least one surface.

11. A protective plate for a liquid crystal display equipped with an infrared sensor, composed of the extruded resin plate (16X, 16Y) according to any one of Claims 1 to 10.

**Patentansprüche**

1. Extrudierte Harzplatte (16X, 16Y), bei der eine Schicht, die ein Methacrylharz (22, 22A, 22B) enthält, auf mindestens eine Oberfläche einer Schicht, die ein Polycarbonat (21) enthält, laminiert ist, wobei

die extrudierte Harzplatte (16X, 16Y) auf einer Oberfläche von und/oder im Inneren der extrudierten Platte (16X, 16Y) mindestens einen Typ eines Färbematerials, das eine schwarze Farbe aufweist, oder eine Vielzahl von Typen von Färbematerialien, die in Kombination eine schwarze Farbe aufweisen, enthält,

die Glasübergangstemperatur der Schicht, die das Methacrylharz (22, 22A, 22B) enthält, 110°C oder höher ist, wie gemäß dem in der Beschreibung angegebenen Verfahren bestimmt,

wenn die extrudierte Harzplatte (16X, 16Y) für 5 Stunden bei einer konstanten Temperatur in einem Bereich von 75 bis 100°C erwärmt wird, der Retardationswert in der Ebene von mindestens einem Teil der extrudierten Harzplatte (16X, 16Y) in einer Breitenrichtung sowohl vor als auch nach dem Erwärmen 50 bis 330 nm beträgt, wie gemäß dem in der Beschreibung angegebenen Verfahren bestimmt,

die Abnahmerate des Retardationswertes nach dem Erwärmen zu dessen Abnahmerate vor dem Erwärmen 30 % oder weniger beträgt, wie gemäß dem in der Beschreibung angegebenen Verfahren bestimmt,

die Lichtdurchlässigkeit bei Wellenlängen von 400 bis 650 nm 30 bis 70 % beträgt und die Lichtdurchlässigkeit bei Wellenlängen von 700 bis 1.000 nm 70 % oder mehr beträgt, wie gemäß JIS K 7361-1 bestimmt, und

das Verhältnis ((S2-S1)/S1), das sich aus der Differenz (S2-S1) zwischen einer linearen Ausdehnungsrate (S1) der Schicht, die das Polycarbonat (21) enthält, und der linearen Ausdehnungsrate (S2) der Schicht, die das Methacrylharz (22, 22A, 22B) enthält, und der linearen Ausdehnungsrate (S1) der Schicht, die das Polycarbonat (21) enthält, zusammensetzt, zwischen -10% und +10% liegt, wie gemäß dem in der Beschreibung angegebenen Verfahren bestimmt.

2. Extrudierte Harzplatte (16X, 16Y) nach Anspruch 1, enthaltend mindestens einen Typ eines organischen Farbstoffs, der eine schwarze Farbe aufweist, oder eine Vielzahl von Typen organischer Farbstoffe, die eine schwarze Farbe in Kombination aufweisen, auf einer Oberfläche von und/oder im Inneren der extrudierten Harzplatte (16X, 16Y).

3. Extrudierte Harzplatte (16X, 16Y) nach Anspruch 1 oder 2, wobei das Methacrylharz 40 bis 80 Masse-% einer Struktureinheit, die von Methylmethacrylat abgeleitet ist, und 60 bis 20 Masse-% einer Struktureinheit, die von einem polyzyklischen aliphatischen Kohlenwasserstoffester der Methacrylsäure abgeleitet ist, enthält.

4. Extrudierte Harzplatte (16X, 16Y) nach Anspruch 1 oder 2, wobei die Schicht, die das Methacrylharz (22, 22A, 22B) enthält, 5 bis 80 Masse-% eines Methacrylharzes und 95 bis 20 Masse-% eines Copolymers, das eine Struktureinheit, die von einer aromatischen Vinylverbindung abgeleitet ist, und eine Struktureinheit, die von Maleinsäureanhydrid abgeleitet ist, enthält.

5. Extrudierte Harzplatte (16X, 16Y) nach Anspruch 4, wobei das Copolymer 50 bis 84 Masse-% einer Struktureinheit, die von der aromatischen Vinylverbindung abgeleitet ist, 15 bis 49 Masse-% einer Struktureinheit, die von Maleinsäureanhydrid abgeleitet ist, und 1 bis 35 Masse-% einer Struktureinheit, die von einem Methacrylsäureester abgeleitet ist, enthält.

6. Extrudierte Harzplatte (16X, 16Y) nach Anspruch 5, wobei der Methacrylsäureester Methylmethacrylat ist.

7. Extrudierte Harzplatte (16X, 16Y) nach einem der Ansprüche 1 bis 6, wobei
die Lichtdurchlässigkeit bei Wellenlängen von 700 bis 1.000 nm 80 % oder mehr beträgt, wie gemäß JIS K 7361-1 bestimmt.

8. Extrudierte Harzplatte (16X, 16Y) nach einem der Ansprüche 1 bis 7, wobei der Retardationswert in der Ebene von mindestens dem Teil der extrudierten Harzplatte (16X, 16Y) in der Breitenrichtung sowohl vor als auch nach dem Erwärmen 80 bis 250 nm beträgt, wie gemäß dem in der Beschreibung angegebenen Verfahren bestimmt.

9. Extrudierte Harzplatte (16X, 16Y) nach einem der Ansprüche 1 bis 8, wobei die Abnahmerate des Retardationswertes nach dem Erwärmen zu seiner Abnahmerate vor dem Erwärmen 15 % oder weniger beträgt, wie gemäß dem in der Beschreibung angegebenen Verfahren bestimmt.

10. Extrudierte Harzplatte (16X, 16Y) nach einem der Ansprüche 1 bis 9, weiter umfassend eine abriebfeste Schicht auf mindestens einer Oberfläche.

11. Schutzplatte für ein Flüssigkristalldisplay, das mit einem Infrarotsensor ausgestattet ist, zusammengesetzt aus der extrudierten Harzplatte (16X, 16Y) nach einem der Ansprüche 1 bis 10.

**Revendications**

1. Plaque de résine extrudée (16X, 16Y) dans laquelle une couche contenant une résine méthacrylique (22, 22A, 22B) est stratifiée sur au moins une surface d'une couche contenant un polycarbonate (21), dans laquelle

la plaque de résine extrudée (16X, 16Y) contient, sur une surface et/ou à l'intérieur de la plaque extrudée (16X, 16Y), au moins un type d'un matériau colorant qui présente une couleur noire, ou une pluralité de types de matériaux colorants qui présentent une couleur noire en combinaison,
la température de transition vitreuse de la couche contenant la résine méthacrylique (22, 22A, 22B) est de 110 °C ou supérieure, telle que déterminée selon le procédé indiqué dans la description,
lorsque la plaque de résine extrudée (16X, 16Y) est chauffée pendant 5 heures à une température constante au sein d'une plage de 75 à 100 °C, la valeur de retard dans le plan d'au moins une partie de la plaque de résine extrudée (16X, 16Y) dans un sens de la largeur est de 50 à 330 nm à la fois avant et après le chauffage, telle que déterminée selon le procédé indiqué dans la description,
le taux de diminution de la valeur de retard après le chauffage sur le taux de diminution de celle-ci avant le chauffage est de 30 % ou inférieur, tel que déterminé selon le procédé indiqué dans la description,
la transmittance lumineuse dans des longueurs d'onde de 400 à 650 nm est de 30 à 70 % et la transmittance lumineuse dans des longueurs d'onde de 700 à 1000 nm est de 70 % ou supérieure, telle que déterminée selon JIS K 7361-1, et le rapport ((S2-S1)/S1) qui est composé de la différence (S2-S1) entre un taux d'expansion linéaire (S1) de la couche contenant le polycarbonate (21) et le taux d'expansion linéaire (S2) de la couche contenant la résine méthacrylique (22, 22A, 22B) et le taux d'expansion linéaire (S1) de la couche contenant le polycarbonate (21) est compris entre -10 % et +10 %, tel que déterminé selon le procédé indiqué dans la description.

2. Plaque de résine extrudée (16X, 16Y) selon la revendication 1, contenant au moins un type d'un colorant organique présentant une couleur noire ou une pluralité de types de colorants organiques qui présentent une couleur noire en combinaison sur une surface et/ou à l'intérieur de la plaque de résine extrudée (16X, 16Y).

3. Plaque de résine extrudée (16X, 16Y) selon la revendication 1 ou 2, dans laquelle la résine méthacrylique contient 40 à 80 % en masse d'une unité structurelle dérivée du méthacrylate de méthyle et 60 à 20 % en masse d'une unité structurelle dérivée d'un ester d'hydrocarbure aliphatique polycyclique d'acide méthacrylique.

4. Plaque de résine extrudée (16X, 16Y) selon la revendication 1 ou 2, dans laquelle la couche contenant la résine méthacrylique (22, 22A, 22B) contient 5 à 80 % en masse d'une résine méthacrylique et 95 à 20 % en masse d'un copolymère contenant une unité structurelle dérivée d'un composé de vinyle aromatique et une unité structurelle dérivée d'anhydride maléique.

5. Plaque de résine extrudée (16X, 16Y) selon la revendication 4, dans laquelle le copolymère contient 50 à 84 % en masse d'une unité structurelle dérivée du composé de vinyle aromatique, 15 à 49 % en masse d'une unité structurelle dérivée d'anhydride maléique, et 1 à 35 % en masse d'une unité structurelle dérivée d'un ester d'acide méthacrylique.

6. Plaque de résine extrudée (16X, 16Y) selon la revendication 5, dans laquelle l'ester d'acide méthacrylique est le méthacrylate de méthyle.

7. Plaque de résine extrudée (16X, 16Y) selon l'une quelconque des revendications 1 à 6, dans laquelle
la transmittance lumineuse dans des longueurs d'onde de 700 à 1000 nm est de 80 % ou supérieure, telle que déterminée selon JIS K 7361-1.

8. Plaque de résine extrudée (16X, 16Y) selon l'une quelconque des revendications 1 à 7, dans laquelle la valeur de retard dans le plan d'au moins la partie de la plaque de résine extrudée (16X, 16Y) dans le sens de la largeur est de 80 à 250 nm à la fois avant et après le chauffage, telle que déterminée selon le procédé indiqué dans la description.

9. Plaque de résine extrudée (16X, 16Y) selon l'une quelconque des revendications 1 à 8, dans laquelle le taux de diminution de la valeur de retard après le chauffage sur le taux de diminution de celle-ci avant le chauffage est de 15 % ou inférieur, tel que déterminé selon le procédé indiqué dans la description.

10. Plaque de résine extrudée (16X, 16Y) selon l'une quelconque des revendications 1 à 9, comprenant en outre une couche résistante à l'abrasion sur au moins une surface.

11. Plaque protectrice pour un affichage à cristaux liquides équipé d'un capteur infrarouge, composée de la plaque de résine extrudée (16X, 16Y) selon l'une quelconque des revendications 1 à 10.

16X

22

21

Fig. 1

16Y

22B

21

22A

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007185956 A
- WO 2011145630 A
- JP 2009248416 A
- JP 2007118597 A
- JP 2004299199 A
- JP 2006103169 A
- JP 2010085978 A
- WO 2015093037 A
- WO 2016038868 A
- JP 2000105541 A
- WO 2010013557 A